# EUROPEAN PATENT APPLICATION

(11) **EP 1 578 161 A1**
(43) Date of publication of application: **21.09.2005**
(21) Application number: 03782923.1
(22) Date of filing: 26.12.2003
(51) Int. Cl.: H04Q 7/38

(54) **BASE STATION DEVICE AND COMMUNICATION TERMINAL DEVICE**

(30) Priority: 27.12.2002 JP 2002380785; 14.02.2003 JP 2003037483
(71) Applicant: MATSUSHITA ELECTRIC INDUSTRIAL CO., LTD., Osaka 571-8501 (JP)
(72) Inventor: UEHARA, Toshiyuki, Yokohama-shi, Kanagawa 232-0011 (JP); YOSHII, Isamu, Urayasu-shi, Chiba 279-0014 (JP); NISHIO, Akihiko, Yokosuka-shi, Kanagawa 239-0846 (JP); HIRAMATSU, Katsuhiko, Yokosuka-shi, Kanagawa 238-0031 (JP); IOCHI, Hitoshi, Yokohama-shi, Kanagawa 235-0023 (JP)
(74) Representative: Grünecker, Kinkeldey, Stockmair & Schwanhäusser Anwaltssozietät
(86) International application number: PCT/JP2003/016909
(87) International publication number: WO 2004/062311

(57) **Abstract**

Abase station apparatus and communication terminal apparatus capable of estimating interference with other cells on an uplink and realizing optimum assignment. At a base station (100), a scheduling and transmission parameter determining section (113) receives soft handover information from a higher layer and does not perform individual assignment processing for a mobile station in the process of soft handover. In this way, the mobile station can perform continuous transmission at a constant transmission rate (e.g., coding rate, modulation scheme, spreading factor, transmit power, etc.).

## Description

### Technical Field

The present invention relates to a base station apparatus and communication terminal apparatus.

### Background Art

As a technology for high-speed transmission of packet data on a downlink, a packet transmission scheme called "HSDPA (High-Speed Downlink Packet Access)" is known (e.g., see Unexamined Japanese Patent Publication No.2000-151623, editing supervised by Keiji Tachikawa "W-CDMA Mobile Communication Scheme" Maruzen Co., Ltd., June 25, 2001, p.403).

In an HSDPA, one physical channel is shared and used by a plurality of mobile stations on a time-division basis . Thus, at a certain point in time, a base station determines to which mobile station information should be transmitted (generally called "scheduling"). Scheduling is carried out based on, for example, an amount of data transmitted from a base station to a mobile station, allowable delay time and communication quality, etc.

On the other hand, a high-speed packet transmission technology on an uplink is also currently under study. As an example of this, a transmission scheme in which a base station schedules transmittable mobile stations from among a plurality of mobile stations as in the case of the downlink is under study. In this case, the base station determines assignment (that is, scheduling) of transmittable mobile stations based on information on transmit power under the transmit power control and communication quality such as CQI (Channel Quality Indicator), etc. Here, the CQI refers to a signal indicating a modulation scheme and coding rate of packet data which the base station has estimated to be demodulatable.

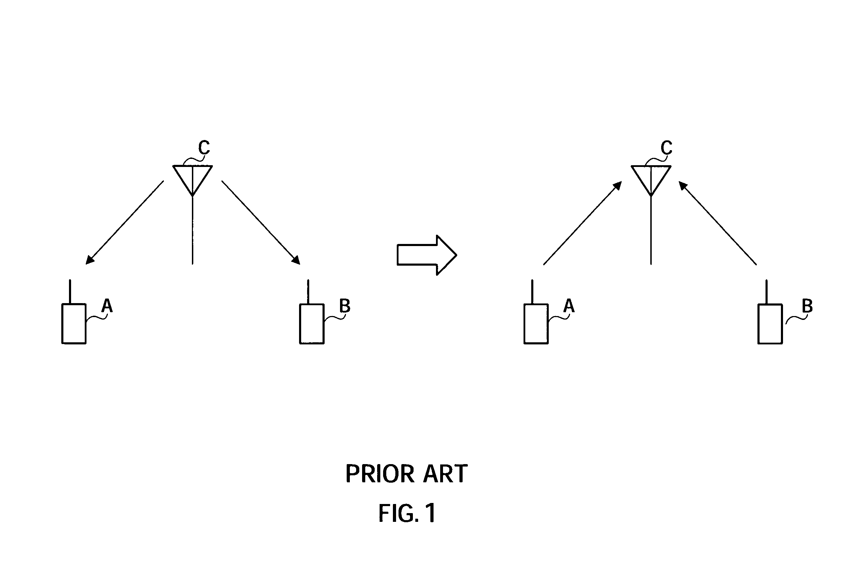

The information (data transmission permission) on the scheduling determined by the base station and a transmission parameter (transmission rate) in this case are transmitted to each mobile station in communication and each mobile station transmits packet data to the base station based on the transmitted scheduling information and transmission parameter. That is, as shown in FIG.1, a base station C sends a data transmission permission and transmission parameter to mobile stations A, B in the own cell based on the assignment result and the mobile stations A, B carry out transmissions according to the data transmission permission and transmission parameter transmitted from the base station C.

However, according to the conventional uplink high-speed packet transmission technology, a fluctuation in interference with other cells also increases when a transmittable mobile station changes in a short time unit due to assignment by the base station. Therefore, the other cells cannot keep up with the interference fluctuation and it is also difficult to estimate interference from the other cells and realize optimum assignment. A mobile station in the process of soft handover (SHO) in particular has large interference with the other cells because it is far from the base station.

### Disclosure of Invention

It is an object of the present invention to provide a base station apparatus and communication terminal apparatus capable of estimating interference from other cells and realizing optimum assignment on an uplink.

According to an embodiment of the present invention, a base station apparatus comprises an assignment section that determines scheduling and transmission parameters for communication terminal apparatuses in the own cell and a transmission section that transmits the assignment result of the assignment section, wherein the assignment section does not perform individual assignment to a communication terminal apparatus in the process of soft handover among communication terminal apparatuses in the own cell.

A communication terminal apparatus according to another embodiment of the present invention comprises an acquisition section that acquires an assignment result from a base station apparatus and a transmission section that performs transmission according to the assigned scheduling and transmission rate based on the acquired assignment result, wherein the transmission section carries out continuous transmission at a predetermined transmission rate when the own communication terminal apparatus is in the process of soft handover.

### Brief Description of Drawings

FIG. 1 illustrates operations of a conventional base station apparatus and communication terminal apparatus;
FIG.2 is a block diagram showing a configuration of main components of a base station apparatus according to Embodiment 1 of the present invention;
FIG.3 is a block diagram showing a configuration of main components of a communication terminal apparatus according to Embodiment 1 of the present invention;
FIG.4 is a configuration diagram of a radio communication system including an RNC;
FIG.5 illustrates operations of the base station apparatus and communication terminal apparatus according to Embodiment 1;
FIG.6 is a block diagram showing a configuration of main components of a modification example of the base station apparatus according to Embodiment 1 of the present invention;
FIG.7A illustrates a case where a transmission parameter selected by a base station is used as a transmission parameter of a mobile station;
FIG.7B illustrates a case where a mobile station can select a transmission parameter using a transmission parameter selected by a base station as an upper limit;
FIG.8A illustrates a case where when a base station does not perform individual assignment, a mobile station performs transmission at a predetermined transmission rate (or less);
FIG.8B illustrates a case where when a base station performs no individual assignment, transmission is performed at the same transmission rate (or less) used for transmission so far;
FIG.9 illustrates a case where received assignment information is not used when soft handover is in progress;
FIG. 10 illustrates a case where no reception process is performed on the assignment information when soft handover is in progress;
FIG.11 is a block diagram showing a configuration of main components of a modification example of a mobile station according to this embodiment;
FIG.12 is a block diagram showing a configuration of main components of another modification example of a mobile station according to this embodiment;
FIG.13 is a block diagram showing a configuration of main components of a base station apparatus according to Embodiment 2 of the present invention;
FIG.14 is a block diagram showing a configuration of main components of a communication terminal apparatus according to Embodiment 2 of the present invention;
FIG.15 illustrates operations of the base station apparatus and communication terminal apparatus according to Embodiment 2;
FIG.16 is a block diagram showing a configuration of main components of a base station apparatus according to Embodiment 3 of the present invention;
FIG.17 is a block diagram showing a configuration of main components of a communication terminal apparatus according to Embodiment 3 of the present invention;
FIG.18A illustrates an example of operations of the base station apparatus and communication terminal apparatus according to Embodiment 3;
FIG.18B illustrates another example of operations of the base station apparatus and communication terminal apparatus according to Embodiment 3;
FIG.18C illustrates a further example of operations of the base station apparatus and communication terminal apparatus according to Embodiment 3;
FIG.19A illustrates a case of a normal operation where there is no restriction on a transmission rate controllable range;
FIG.19B illustrates a case of soft handover in progress where there is some restriction on a transmission rate controllable range;
FIG.20 is a block diagram showing a configuration of main components of a base station apparatus according to Embodiment 4 of the present invention;
FIG.21 is a block diagram showing a configuration of main components of a communication terminal apparatus according to Embodiment 4 of the present invention;
FIG.22A illustrates operations of the base station apparatus and communication terminal apparatus of Embodiment 4 when an amount of interference is small;
FIG.22B illustrates operations when an amount of interference is large;
FIG.23 illustrates operations of an RNC, base station apparatus and communication terminal apparatus according to Embodiment 5;
FIG.24 illustrates an example of an operation mode of the RNC according to Embodiment 5;
FIG.25 illustrates another example of an operation mode of the RNC according to Embodiment 5;
FIG.26A illustrates a case where one base station performs assignment and one base station receives;
FIG.26B illustrates a case where one base station performs assignment and a plurality of base stations receive; and
FIG.26C illustrates a case where a plurality of base stations performs assignment and a plurality of base stations receive.

### Best Mode for Carrying out the Invention

An essence of the present invention is to provide an uplink high-speed packet transmission scheme in which a base station apparatus causes a communication terminal apparatus in the process of soft handover or a communication terminal apparatus causing large interference with other cells to carry out continuous transmission at a constant transmission rate by not carrying out individual assignment or always carrying out assignment or switching over to another channel capable of continuous transmission to thereby make it possible to estimate interference from the other cells on the uplink and realize optimum assignment.

With reference now to the attached drawings, embodiments of the present invention will be explained in detail below. Here, the base station apparatus will be simply referred to as "base station" and the communication terminal as "mobile station."

### (Embodiment 1)

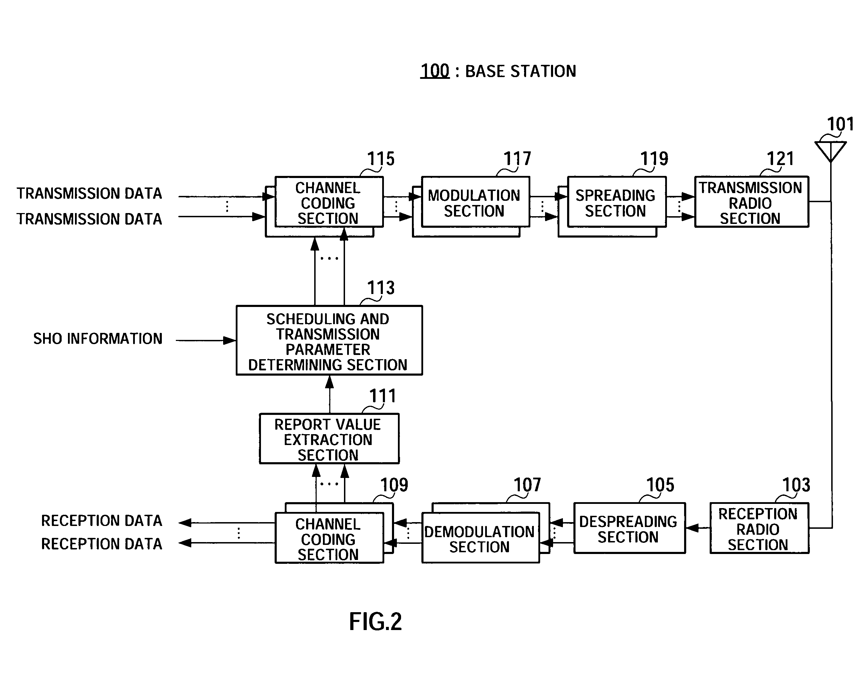

FIG.2 is a block diagram showing a configuration of main components of a base station apparatus (base station) 100 according to Embodiment 1 of the present invention.

The base station 100 shown in FIG.2 has the function of determining a transmittable mobile station from among mobile stations in the own cell and a transmission rate (e.g., coding rate, modulation scheme, spreading factor, transmit power) and performing assignment and comprises an antenna 101, a reception radio section 103, a despreading section 105, a demodulation section 107, a channel coding section 109, a report value extraction section 111, a scheduling and transmission parameter determining section 113, a channel coding section 115, a modulation section 117, a spreading section 119 and a transmission radio section 121. Here, in order to be able to handle transmission data for a plurality of users, the base station is provided with a plurality of despreading sections 105, demodulation section 107, channel coding sections 109, 115, modulation sections 117 and spreading sections 119.

A feature of this embodiment is that soft handover (SHO) information is input from a higher layer (e.g., RNC (Radio Network Controller)) to the scheduling and transmission parameter determining section 113 and assignment is controlled based on this soft handover information. Here, the soft handover information is information indicating which mobile station in the own cell is in the process of soft handover. Assignment control will be explained more specifically later.

The scheduling information is information on a transmittable mobile station determinedfromamongmobile stations in the own cell in performing assignment, that is, information on a data transmission permission and transmission parameters are information on a transmission rate (coding rate, modulation scheme, spreading factor, transmitpower, etc.) determined inperformingassignment. Here, the scheduling information and transmission parameters will be collectively referred to as "assignment information."

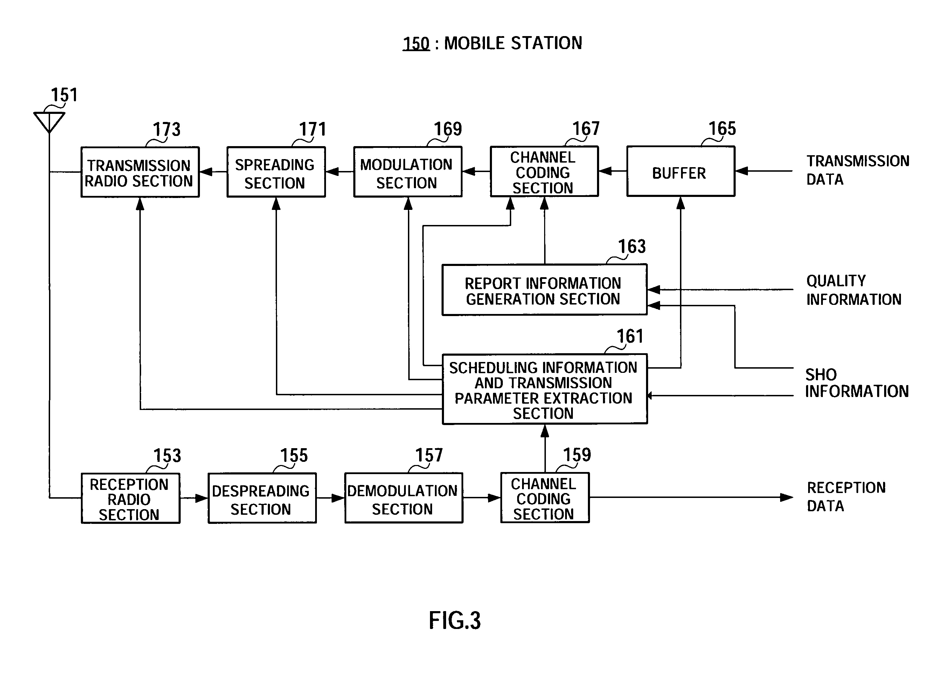

FIG.3 is a block diagram showing a configuration of main components of a communication terminal apparatus (mobile station) 150 according to Embodiment 1 of the present invention.

When assigned to the base station 100, the mobile station 150 shown in FIG. 3 has the function of transmitting data according to an assigned transmission rate (coding rate, modulation scheme, spreading factor, transmitpower, etc.) and comprises an antenna 151, a reception radio section 153, a despreading section 155, a demodulation section 157, a channel coding section 159, a scheduling information and transmission parameter extraction section 161, a report information generation section 163, a buffer 165, a channel coding section 167, a modulation section 169, a spreading section 171 and a transmission radio section 173.

In this embodiment, soft handover information is input from a higher layer to the scheduling information and transmission parameter extraction section 161 and report information generation section 163 and based on this soft handover information, control is performed as to whether scheduling information and transmission parameters should be extracted or not or whether predetermined report information is generated or not. Here, the soft handover information is information indicating that the own mobile station is in the process of soft handover. This control will be explained more specifically later.

Next, operations of the base station 100 and mobile station 150 will be explained below.

The base station 100 receives a signal transmitted by radio from each mobile station through the antenna 101 and outputs the signal to the reception radio section 103.

Then, the reception radio section 103 performs predetermined radio processing such as down-conversion on the signal received from the antenna 101. The output signal (baseband signal) of the reception radio section 103 is output to the despreading section 105.

Then, the despreading section 105 despreads the received signal using a spreading code specific to each user (mobile station) and the demodulation section 107 demodulates the despread received signal. The demodulated received signal is output to the channel coding section 109.

Then, the channel coding section 109 decodes the demodulated received signal, acquires the reception data from each user (mobile station) and outputs the reception data to the report value extraction section 111.

The report value extraction section 111 extracts a predetermined report value (e.g., CQI) necessary for assignment processing from among reception data of each mobile station. The extracted report value is output to the scheduling and transmission parameter determining section 113.

The scheduling and transmission parameter determining section 113 determines scheduling and transmission parameters using the extracted report value. That is, the scheduling and transmission parameter determining section 113 determines a transmittable mobile station from among mobile stations in the own cell and transmission rate (e.g., coding rate, modulation scheme, spreading factor, transmit power). The determined assignment information is output to the channel coding section 115.

At this time, according to this embodiment, soft handover information is input from a higher layer to the scheduling and transmission parameter determining section 113 and the scheduling and transmission parameter determining section 113 does not perform the above described normal assignment processing on a mobile station in the process of soft handover. In this way, when there is data to be transmitted as will be described later, the mobile station carries out continuous transmission at a constant transmission rate (coding rate, modulation scheme, spreading factor, transmit power).

Though not shown, when soft handover is completed, a signal indicating the end of soft handover (soft handover end information) is input from the higher layer, the operating mode (hereinafter referred to as "continuous transmission mode") is canceled and changed to the normal operating mode (hereinafter referred to as "assigned transmission mode").

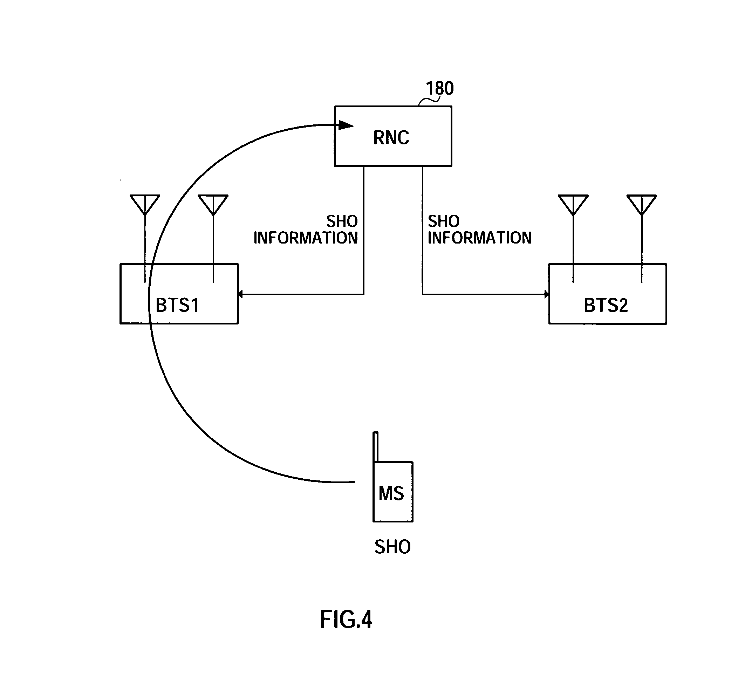

Here, the soft handover information and soft handover end information input to the scheduling and transmission parameter determining section 113 are supplied from, for example, an RNC 180 shown in FIG.4. The RNC 180 is generally connected to a plurality of base stations (BTS: Base Transceiver Station) and has the function of performing control over connections of outgoing/incoming calls, clear-back control, handover control, etc., over a plurality of BTSs.

Here, the method of canceling a continuous transmission mode is not limited to the above described example. For example, in a system to which soft handover information is periodically supplied as long as the system is in the process of soft handover, if the supply of soft handover information is interrupted for a predetermined time, it is also possible to cancel the continuous transmission mode and change the mode to the normal assigned transmission mode.

For every piece of transmission data for each user (mobile station), the channel coding section 115 performs coding on transmission data including assignment information from the scheduling and transmission parameter determining section 113, and then the modulation section 117 modulates the coded transmission data. The modulated transmission data is output to the spreading section 119.

Then, the spreading section 119 spreads the modulated transmission data using a spreading code specific to each user (mobile station). The spread transmission data is output to the transmission radio section 121, subjected to predetermined radio processing such as up-conversion here and transmitted by radio from the antenna 101.

Then, the mobile station 150 receives the signal transmitted by radio from the base station through the antenna 151 and outputs the signal to the reception radio section 153.

The reception radio section 153 applies predetermined radio processing such as down-conversion to the signal received by the antenna 151. The output signal (baseband signal) of the reception radio section 153 is output to the despreading section 155.

Then, the despreading section 155 despreads the received signal using the same spreading code as that for transmission and the demodulation section 157 demodulates the despread received signal. The demodulated received signal is output to the channel coding section 159.

Then, the channel coding section 159 decodes the demodulatedreceivedsignal,acquiresreception datafrom the base station and outputs the reception data to the scheduling information and transmission parameter extraction section 161.

The scheduling information and transmission parameter extraction section 161 extracts the scheduling information and transmission parameters (coding rate, modulation scheme, spreading factor, transmit power) from the reception data from the base station. The extracted scheduling information is output to the buffer 165. The extracted transmission parameters (modulation scheme, coding rate, spreading factor, transmit power) are output to related sections, that is, the modulation section 169, channel coding section 167, spreading section 171, transmission radio section 173 in order of the above described parameters.

At this time, according to this embodiment, soft handover information (and soft handover end information) is input from a higher layer to the scheduling information and transmission parameter extraction section 161 and when the own mobile station is in the process of soft handover, the scheduling information and transmission parameter extraction section 161 does not extract scheduling information and transmission parameters. As a result, it is possible to prevent consumption of resources and consumption of power on the uplink. At this time, the mobile station 150 controls the sections 165 to 173 so as to perform continuous transmission at a constant transmission rate (modulation scheme, coding rate, spreading factor, transmit power).

Here, the constant transmission rate is preferably a low transmission rate, or more specifically, the lowest transmission rate among available transmission rates, for example. Thus, setting a low transmission rate (e.g., the lowest transmission rate) can reduce interference with other cells, prevent the base station from unnecessarily overestimating interference from other cells and allow the base station to perform optimum assignment to mobile stations in the own cell.

On the other hand, the report information generation section 163 receives channel quality information and generates information (e.g., CQI) to be reported to the base station for assignment. The generated report information (report value) is output to the channel coding section 167.

At this time, in this embodiment, soft handover information (and soft handover end information) is input from a higher layer to the report information generation section 163 and when the own mobile station is in the process of soft handover, the report information generation section 163 does not generate report information.

The buffer 165 temporarily stores the input transmission data and outputs the stored transmission data to the channel coding section 167 based on the scheduling information from the scheduling information and transmission parameter extraction section 161. However, when the own mobile station is in the process of soft handover, data is output continuously so as to perform continuous transmission as described above.

Then, the channel coding section 167 performs coding on transmission data from the buffer 165 and report information (CQI, etc.) from the report information generation section 163 based on the transmission rate (especially coding rate) from the scheduling information and transmission parameter extraction section 161, and then the modulation section 169 modulates the coded information one by one based on the transmission rate (especially modulation scheme) from the scheduling information and transmission parameter extraction section 161 and the spreading section 171 spreads the modulated information using a specific spreading code based on the transmission rate (especially spreading factor) from the scheduling information and transmission parameter extraction section 161. The spread information is output to the transmission radio section 173, subjected to radio processing such as up-conversion based on the transmission rate (especially transmit power) from the scheduling information and transmission parameter extraction section 161, and then sent by radio from the antenna 151. However, when the own mobile station is in the process of soft handover, the transmission rate is controlled to a constant transmission rate (coding rate, modulation scheme, spreading factor, transmit power) as described above.

In short, according to this embodiment, when a mobile station is in the process of soft handover, a base station does not perform individual assignment to the mobile station in question, which is performed on other mobile stations, and the mobile station performs continuous transmission at a constant transmission rate if there is any data to be transmitted. That is, the mobile station normally receives assignment information from the base station and when it receives assignment, the mobile station transmits data according to the assignment information. However, when the mobile station is in the process of soft handover, the mobile station does not receive this assignment information and performs continuous transmission at a constant transmission rate. As a result, a base station in a different cell can always receive a signal from the mobile station in the process of soft handover, estimate reception power and interference with other mobile stations based on the recognition of this signal and thereby realize optimum assignment.

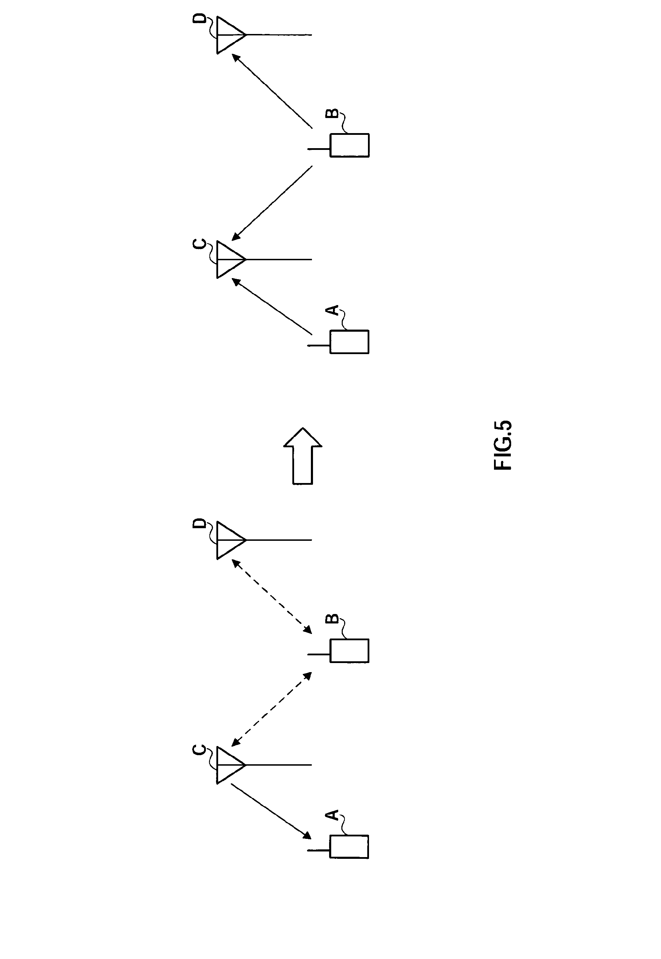

For example, as shown on the left of FIG.5, a base station C sends a data transmission permission and transmission parameters to a mobile station A and sends no assignment information to a mobile station B which is in the process of soft handover. Abase station D sends no assignment information to the mobile station B, either. Themobile station sends no report information (CQI, etc.) . As a result, as shown on the right of FIG.5, the mobile station A performs transmission according to the data transmission permission and transmission parameters sent from the base station C, whereas the mobile station B performs continuous transmission according to certain transmission parameters for transmission during soft handover.

Thus, according to this embodiment, when a mobile station is in the process of soft handover, the base station does not perform any individual assignment to the mobile station and the mobile station in question performs continuous transmission at a constant transmission rate, and therefore it is possible to reduce fluctuations in an amount of interference with other cells on an uplink, estimate interference from other cells in performing assignment and realize optimum assignment.

Furthermore, by making it clear to all base stations connected by means of soft handover at the time of assignment that transmission is to be carried out from now, it is possible to estimate an amount of interference and realize assignment at that time.

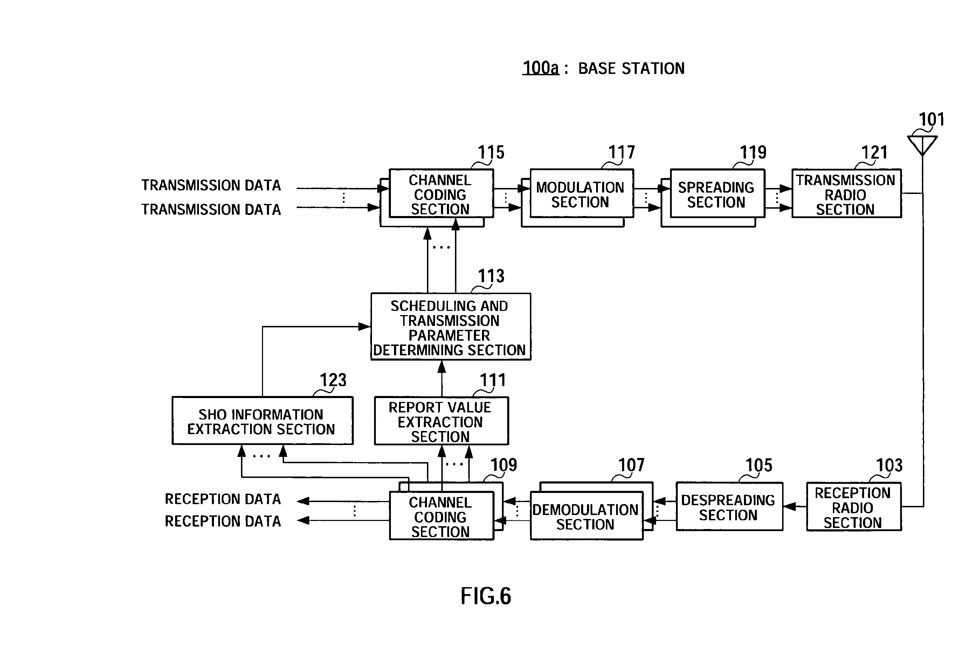

This embodiment has described that soft handover (SHO) information is obtained from a higher layer (e.g., RNC in the case of a base station), but it is also possible to exchange a signal indicating that soft handover is in progress between the mobile station and base station and perform the above described control using this signal. In this case, such a signal is created, for example, by a mobile station and sent to a base station with a scheduling and transmission parameter determining section in the base station as the destination. As a result, the base station (scheduling and transmission parameter determining section in the base station) can directly and easily know through the signal from the mobile station that the mobile station is in the process of soft handover. For this reason, as shown, for example, in FIG.6, a base station 100a is provided with an SHO information extraction section 123. The SHO information extraction section 123 extracts soft handover (SHO) information from reception data from each mobile station. The extracted soft handover information is output to the scheduling and transmission parameter determining section 113.

Furthermore, in this embodiment, the mobile station normally sends report information such as channel quality related information (CQI) to the base station and suspends (does not generate CQI, etc.) reporting on CQI, etc., when soft handover takes place, but this is of course optional. Thus, not sending report information during soft handover can prevent consumption of resources and power consumption on an uplink. In that case, when soft handover is terminated or when it is known beforehand that soft handover will be terminated, reporting on CQI, etc., is resumed.

Furthermore, it is preferable in this embodiment that transmit power control be observed during transmission. This allows the reception performance to be guaranteed at the base station apparatus.

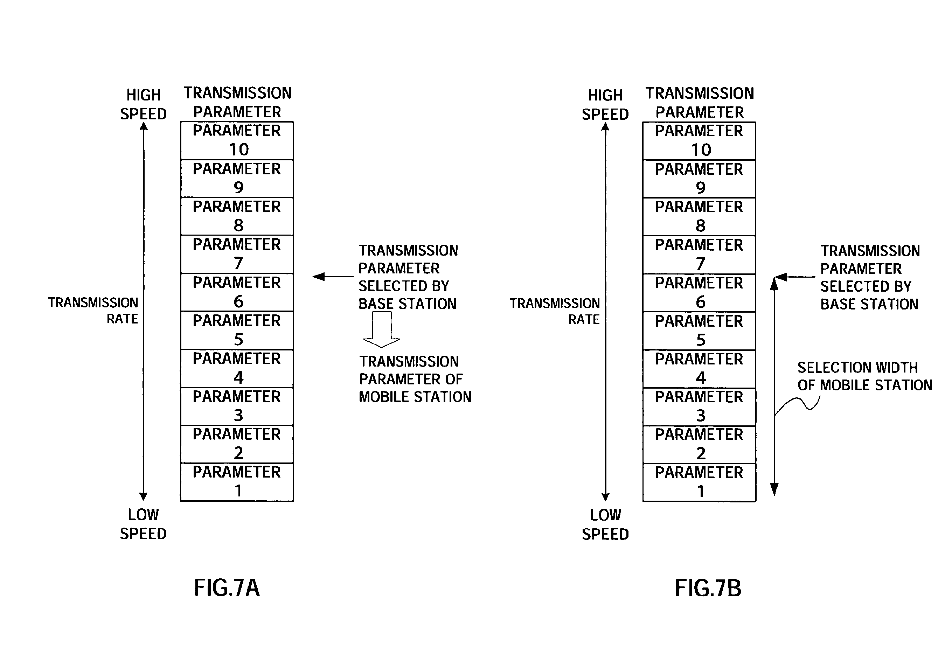

Furthermore, in this embodiment, a mobile station performs transmission according to a transmission rate determined by a base station, but the mobile station need not always perform transmission at the assigned transmission rate, and can also perform transmission by selecting a transmission rate equal to or lower than the assigned transmission rate as the upper limit as appropriate. That is, as shown in FIG.7A, there can be not only the case where the same transmission parameter selected by the base station is used as the transmission parameter of the mobile station, but also the case as shown in FIG.7B where the base station specifies an upper limit of the transmission rate, that is, the base station selects a transmission parameter as the upper limit value and the mobile station selects a transmission rate equal to or lower than the specified transmission rate as the upper limit to suit the convenience of the own station and performs transmission.

In this way, by the base station specifying an upper limit of the transmission rate, the mobile station can perform transmission at a specified transmission rate or lower according to transmit power at the own station or an amount of data in the buffer even when transmission is not possible at the specified transmission rate. For example, even when the base station fixes a predetermined transmission rate as an upper limit in the process of soft handover, the mobile station can select a transmission rate not exceeding the upper limit. For example, if parameter 3 is assumed to be an upper limit during soft handover, the mobile station can also perform transmission using parameter 2.

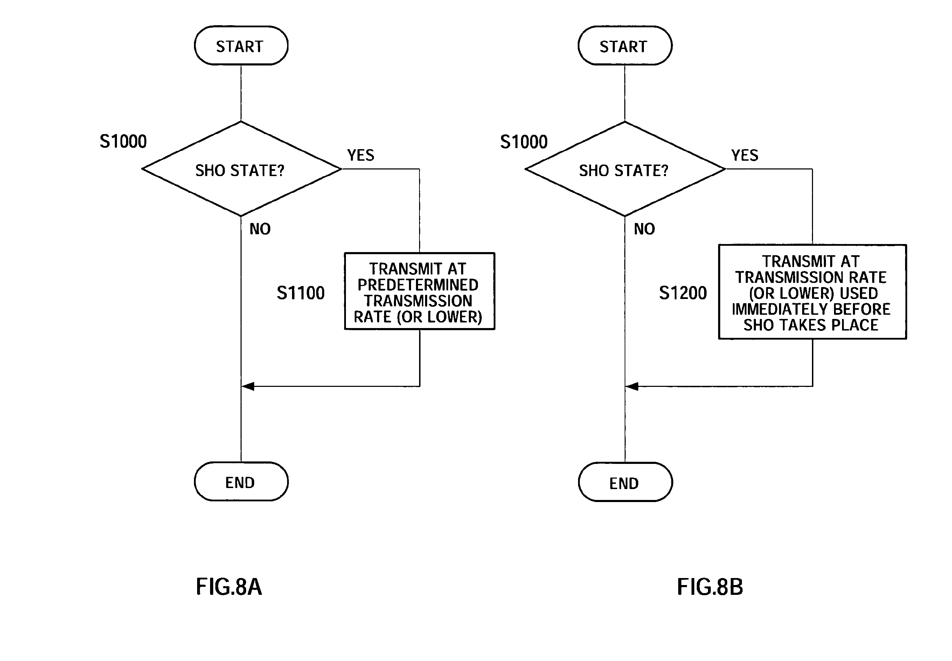

Furthermore, in this embodiment, when the base station does not perform individual assignment, the mobile station performs transmission at a predetermined transmission rate (or lower), but can also perform transmission at the same transmission rate as (or lower than) that used for transmission so far. That is, since individual assignment is not performed, the transmission rate used for transmission so far continues to be specified. In short, for example, when the mobile station is in the process of soft handover (S1000: YES), there can be not only the case where transmission is performed (S1100) at a predetermined transmission rate (or lower) as shown in FIG.8A, but also the case where transmission is performed (S1200) at the transmission rate (or lower) used immediately before soft handover takes place as shown in FIG.8B. Thus, continuing transmission at the same transmission rate (or lower) used for transmission so far allows abase station in another cell to easily estimate an amount of interference given to a signal from a mobile station in the own cell and thereby realize efficient assignment.

Furthermore, as shown above, it is possible not to extract assignment information (scheduling information and transmission parameters) during soft handover, that is, to subject assignment information to reception processing but not use it, or it is also possible not to receive assignment information, that is, not to perform reception processing itself.

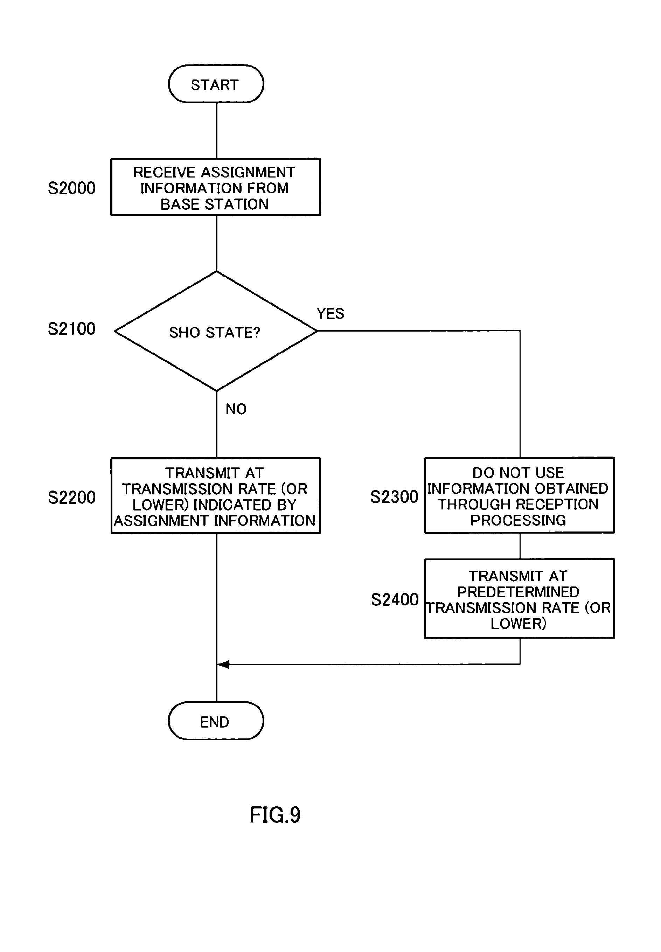

That is, in the former, as shown in FIG.9, assignment information from the base station is received (S2000) and if soft handover is not in progress (S2100: NO), transmission is performed at a transmission rate (or lower) indicated in assignment information (S2200), or if soft handover is in progress (S2100: YES), the information obtained using reception processing is not used (S2300) and transmission is performed at a predetermined transmission rate (or lower) (S2400) . In step S2400, transmission may also be performed at the transmission rate (or lower) used immediately before soft handover takes place instead of transmission at a predetermined transmission rate (or lower).

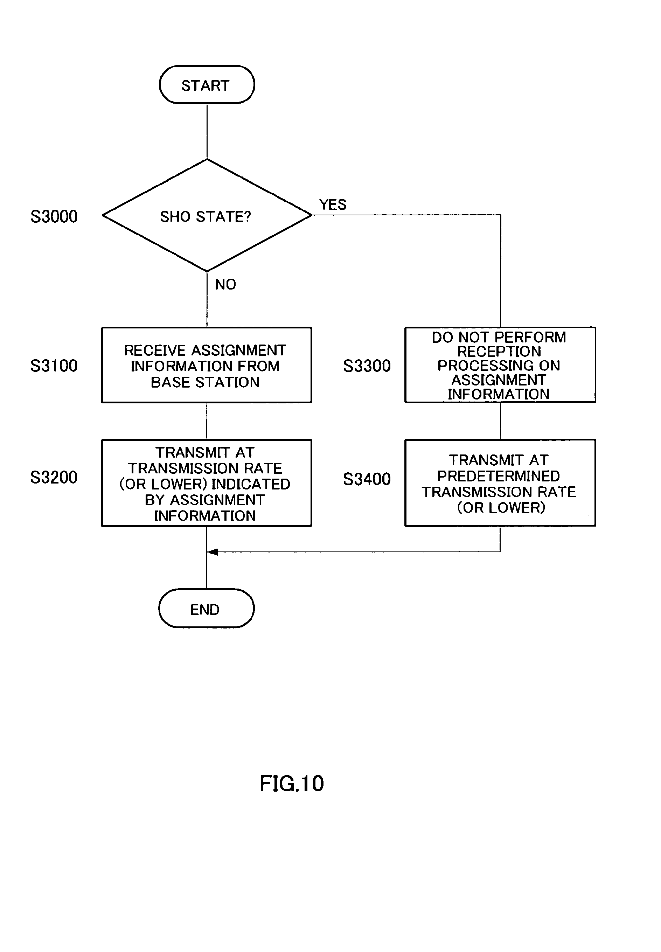

On the other hand, in the latter case, as shown in FIG.10, when no soft handover takes place (S3000: NO), assignment information from the base station is received (S3100), transmission is performed at the transmission rate (or lower) indicated in this assignment information (S3200), and when soft handover is in progress (S3000: YES), assignment information is not subjected to reception processing (S3300) and transmission is performed at the predetermined transmission rate (or lower) (S3400). In step S3400, it is also possible to perform transmission at a transmission rate (or lower) used immediately before soft handover takes place instead of transmission at the predetermined transmission rate (or lower).

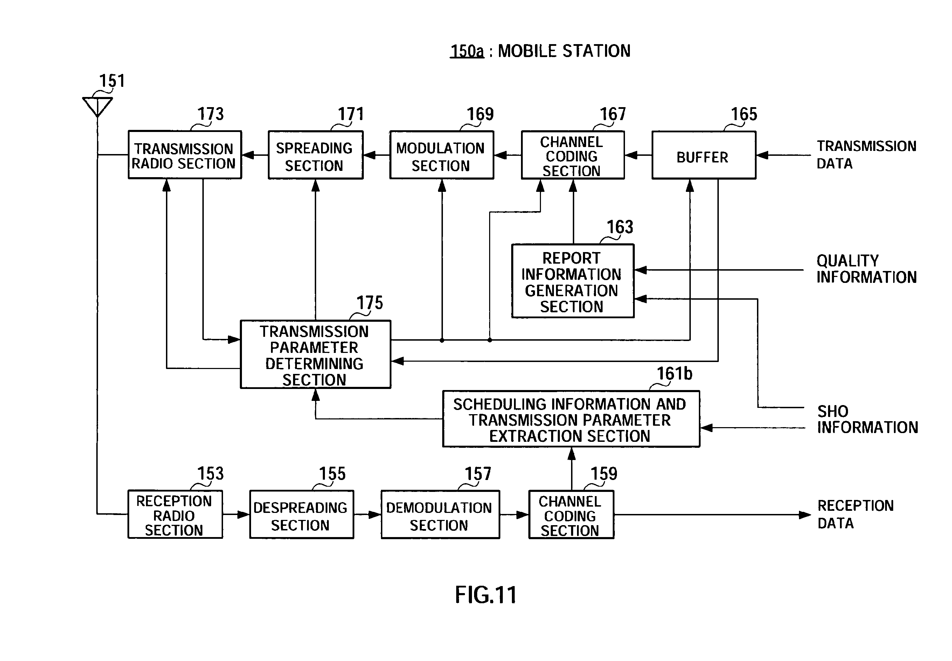

FIG.11 is a block diagram showing a configuration of main components of a modification example of a mobile station according to this embodiment. This mobile station 150a has the above described functions, that is, the function of determining a transmission rate using a specified transmission rate as an upper limit, the function of performing transmission at the same transmission rate (or lower) used so far when there is no individual assignment and the function of performing transmission at a predetermined transmission rate (or lower) without using any assignment information which may exist when soft handover is in progress. Therefore, the mobile station 150a is provided with a transmission parameter determining section 175.

The transmission parameter determining section 175 determines transmittable transmission parameters (transmission rate) from information on available power (obtained from the transmission radio section 173) and information on a transmission buffer (obtained from the transmission buffer 165) with the transmission parameters (transmission rate) input from the scheduling information/communication parameter extraction section 161b as the upper limit. Furthermore, the transmission parameter determining section 175 receives the soft handover (SHO) information through the scheduling information and transmission parameter extraction section 161b and can perform control so that transmission is performed at the same transmission rate (or lower) used for transmission so far when no individual assignment is performed. Furthermore, using the soft handover (SHO) information, the scheduling information and transmission parameter extraction section 161b may not extract assignment information, that is, choose not to use the information.

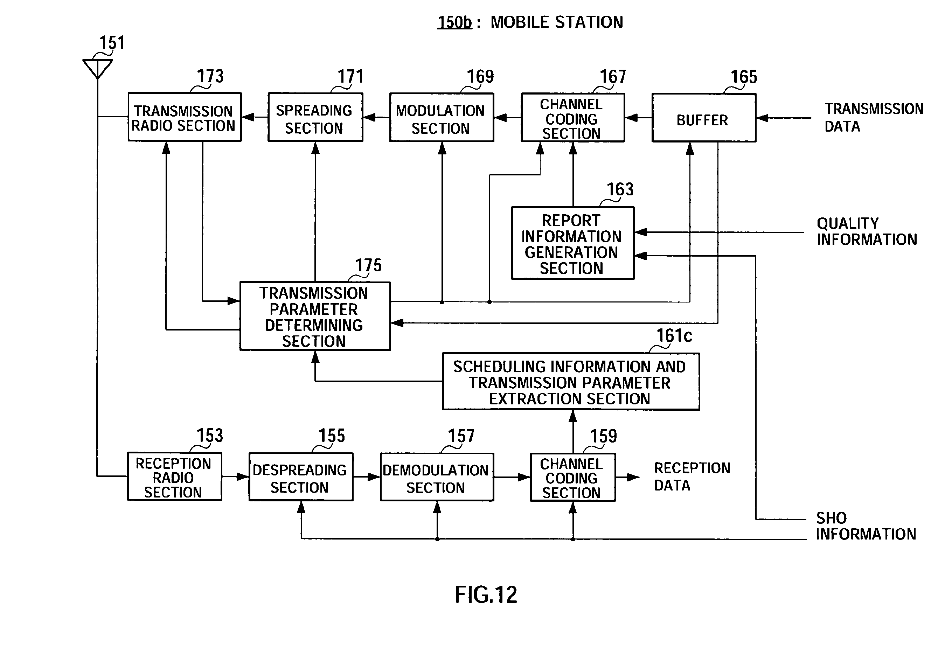

FIG.12 is a block diagram showing a configuration of main components of another modification example of the mobile station according to this embodiment. In addition to the above described functions, that is, the function of determining a transmission rate with the specified transmission rate as an upper limit and the function of performing transmission at the same transmission rate (or lower) used for transmission so far when no individual assignment is performed (these two functions are the same as those of the mobile station 150a in FIG.11), this mobile station 150b has the function of performing transmission at a predetermined transmission rate (orlower) without performing reception processing on the assignment information when soft handover is in progress. For this reason, the mobile station 150b inputs the soft handover (SHO) information to a despreading section 155a, demodulation section 157a and channel coding section 159a to perform control so that assignment information is not subjected to reception processing. In this way, when reception processing is not performed, it is possible to reduce an amount of processing and suppress power consumption as well.

### (Embodiment 2)

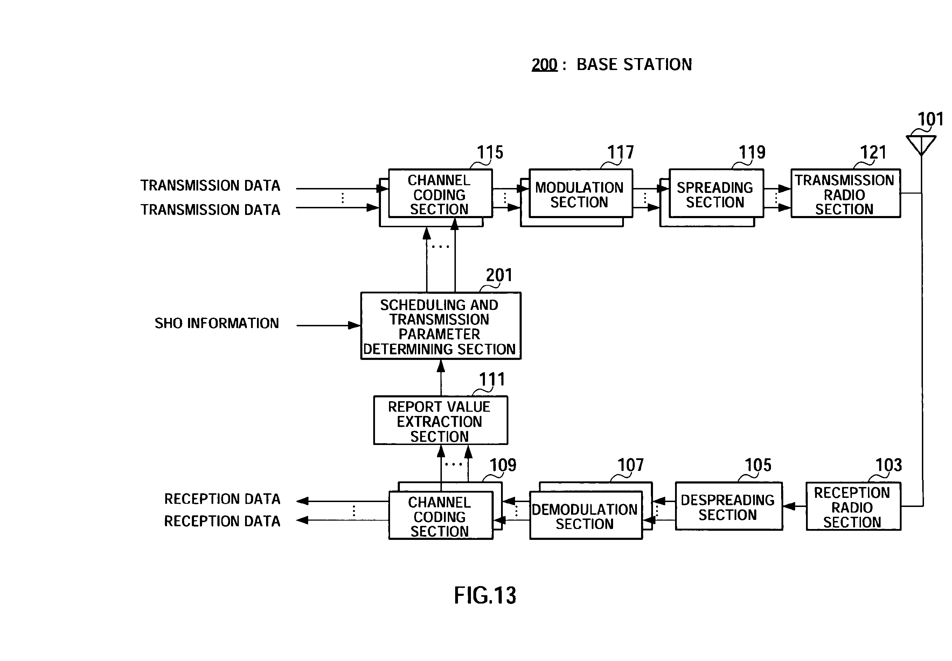

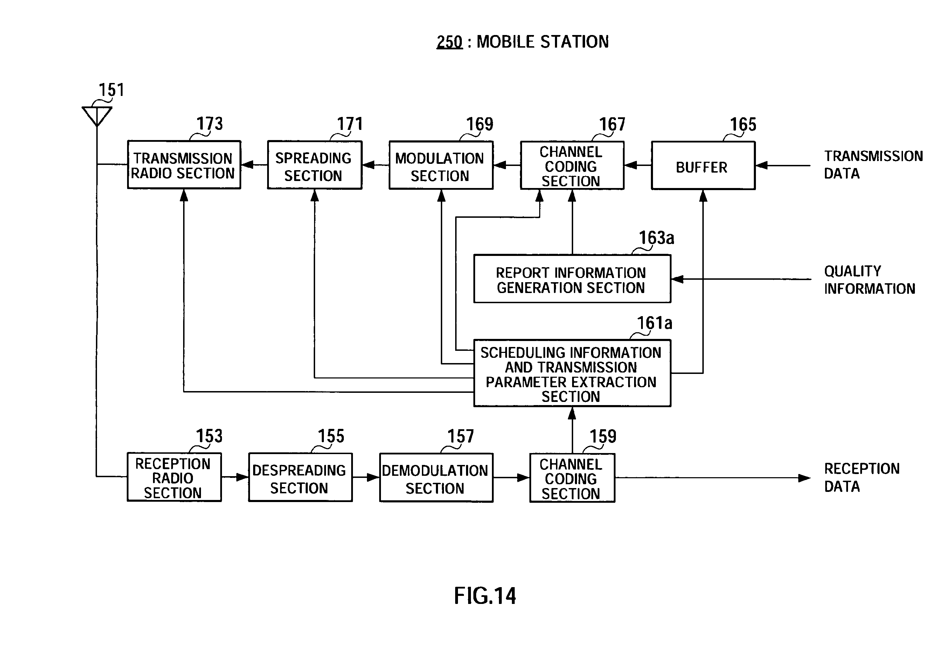

FIG.13 is a block diagram showing a configuration of main components of a base station apparatus (base station) 200 according to Embodiment 2 of the present invention and FIG.14 is a block diagram showing a configuration of main components of a communication terminal apparatus (mobile station) 250 according to Embodiment 2 of the present invention. The base station 200 shown in FIG.13 has a basic configuration similar to that of the base station 100 shown in FIG.2 and the same components are assigned the same reference numerals and explanations thereof will be omitted. Furthermore, the mobile station 250 shown in FIG.14 has a basic configuration similar to that of the mobile station 150 shown in FIG.3 and the same components are assigned the same reference numerals and explanations thereof will be omitted.

As opposed to Embodiment 1 where when soft handover is in progress, both the base station and mobile station perform transmission recognizing that soft handover is in progress (see SHO information in FIG.2 and FIG.3), a feature of this embodiment is that a mobile station operates according to a normal mode. Thus, the base station 200 performs assignment for a mobile station in the process of soft handover every time through the scheduling and transmission parameter determining section 201 and always assigns the same transmission rate (e.g., modulation scheme, coding rate, spreading factor, transmit power).

In this way, the mobile station 250 needs only to perform transmission according to assignment information from the base station 200 even when soft handover is in progress, and therefore it is possible to realize operations and effects similar to those of Embodiment 1 without adding any new functions to the conventional art for the mobile station 250.

Thus, both the scheduling information and transmission parameter extraction section 161a and report information generation section 163a do not receive soft handover information.

In this case, to prevent the mobile station 250 from transmitting report information (CQI, etc.) when soft handover is in progress, the base station 200 can transmit a control signal indicating that intention.

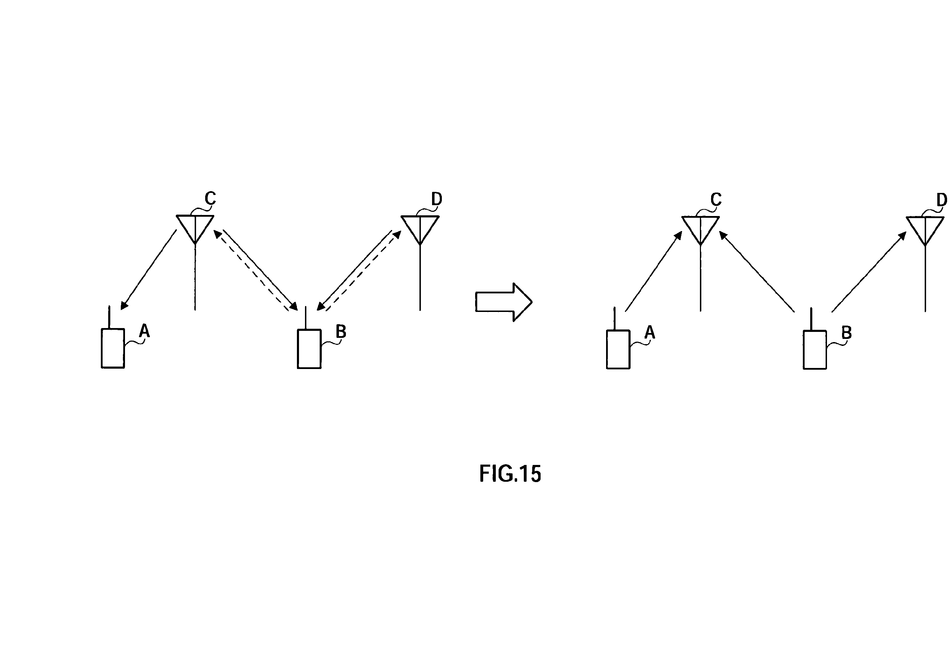

For example, according to this embodiment, as shown on the left of FIG.15, a base station C sends a data transmission permission and transmission parameters to a mobile station A and always sends assignment information to a mobile station B which is in the process of soft handover so as to always perform transmission at a constant transmission rate. As with the base station C, a base station D also always sends assignment information to the mobile station B so as to always perform transmission at a constant transmission rate. On the other hand, the mobile station sends no report information (CQI, etc.). As a result, as shown on the right of FIG.15, the mobile station A performs transmission according to a data transmission permission and transmission parameters sent from the base station C, while the mobile station B follows assignment information of the base stations C, D, and thereby performs continuous transmission at a constant transmission rate consequently.

Thus, according to this embodiment, when a mobile station is in the process of soft handover, the base station always performs assignment to the mobile station at a constant transmission rate and the mobile station performs continuous transmission at a constant transmission rate, and therefore it is possible to estimate interference from other cells on an uplink and realize optimum assignment.

This embodiment has explained the case where both the base stations C, D send assignment information, but similar effects can also be obtained even if either of the two sends assignment information.

Furthermore, the modification example etc., described in Embodiment 1 is also applicable to this embodiment.

### (Embodiment 3)

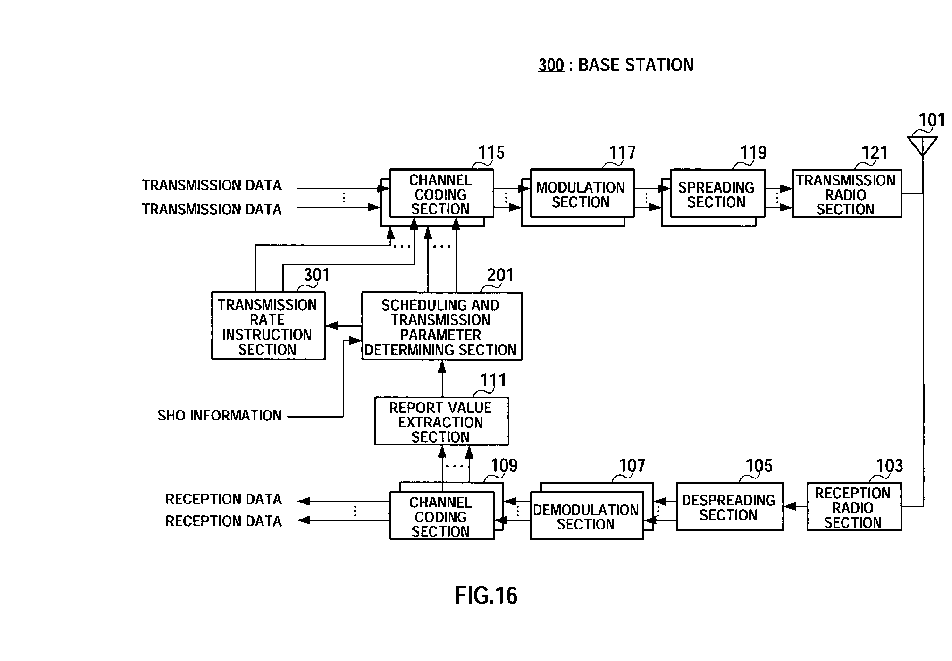

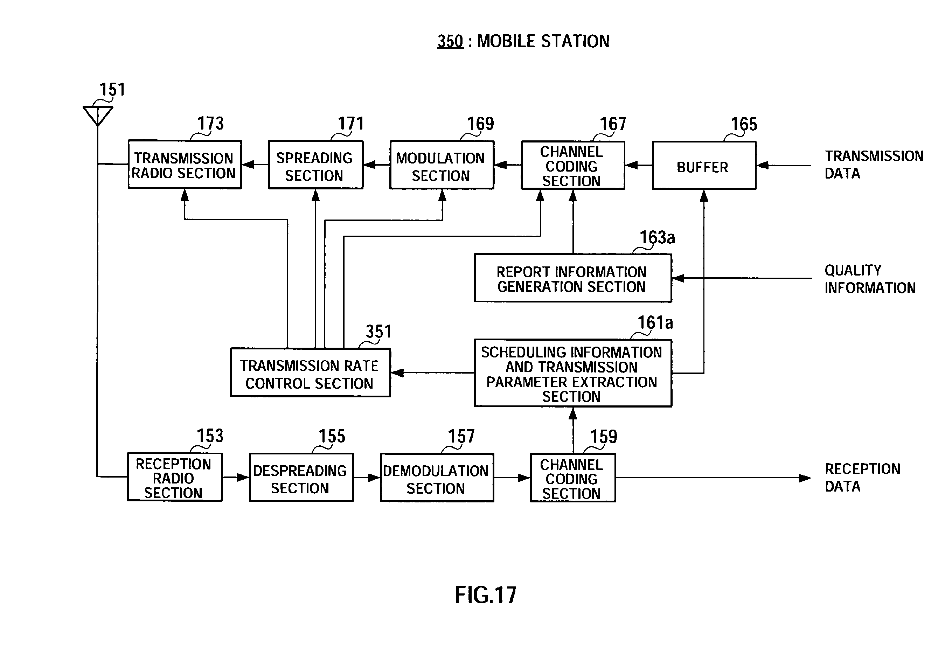

FIG.16 is a block diagram showing a configuration of main components of a base station apparatus (base station) 300 according to Embodiment 3 of the present invention and FIG.17 is a block diagram showing a configuration of main components of a communication terminal apparatus (mobile station) 350 according to Embodiment 3 of the present invention. The base station 300 shown in FIG.16 has a basic configuration similar to that of the base station 200 shown in FIG.13 and the same components are assigned the same reference numerals and explanations thereof will be omitted. Furthermore, the mobile station 350 shown in FIG.17 has a basic configuration similar to that of the mobile station 250 shown in FIG.14 and the same components are assigned the same reference numerals and explanations thereof will be omitted.

A feature of this embodiment is to allow changes in transmission parameters (e.g., codingrate, modulation scheme, spreading factor, transmit power, etc.) used when soft handover is in progress. More specifically, when, instructed, for example, by all base stations of the active set (that is, base stations involved in soft handover) to increase transmit power and increase a transmission rate, a mobile station can increase transmit power and increase the transmission rate according to the instruction. On the other hand, when instructed by any one of base stations of the active set to decrease a transmission rate, the mobile station can decrease the transmission rate according to the instruction. In this way, it is possible to reduce interference with other cells. The above described instructions are included in assignment information, for example.

For this purpose, the base station 300 is provided with a transmission rate instruction section 301 and the mobile station 350 is provided with a transmission rate control section 351.

The transmission rate instruction section 301 receives assignment information and soft handover information from the scheduling and transmission parameter determining section 201 and generates a signal instructing about a transmission rate for a mobile station in the process of soft handover. The instruction signal generated is output to a channel coding section 115.

Furthermore, the transmission rate control section 351 receives the transmission parameters and instruction signal frombase station of the active set from a scheduling information and transmission parameter extraction section 161a, changes the transmission parameters (coding rate, modulation scheme, spreading factor, transmit power) according to a predetermined logic and instructs sections 167 to 173 about the change.

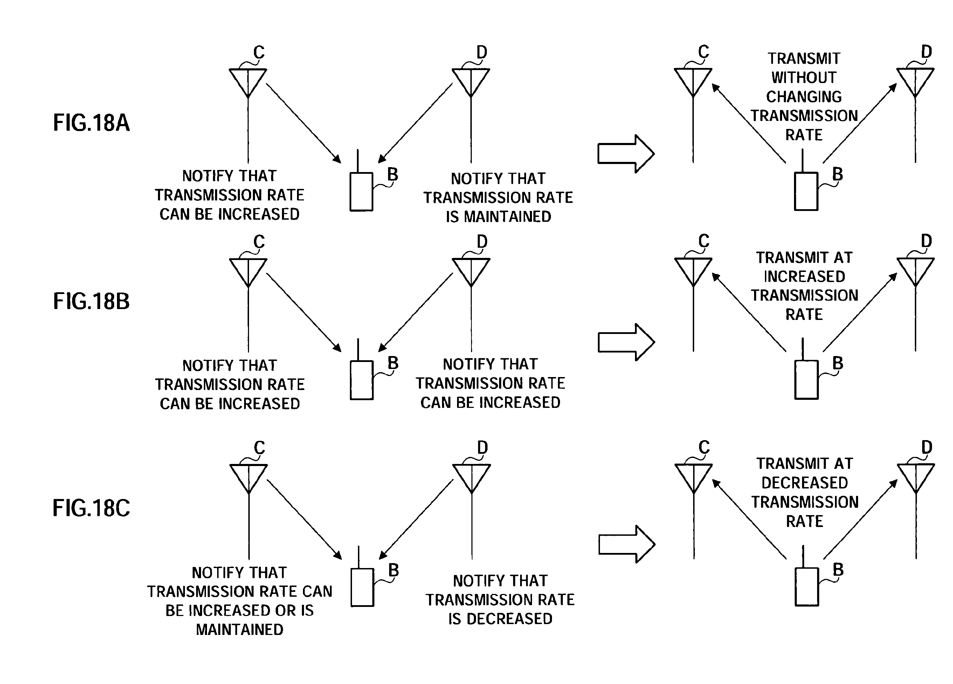

For example, as pattern 1, as shown in FIG.18A, when a mobile station B in the process of soft handover is notified by a base station C that it is possible to increase the transmission rate and notified by a base station D to maintain the transmission rate, the mobile station B performs transmission without changing the transmission rate.

On the other hand, as pattern 2, as shown in FIG. 18B, when the mobile station B in the process of soft handover is notified by the base station C that it is possible to increase the transmission rate and also notified by the base station D that it is possible to increase the transmission rate, the mobile station B performs transmission by increasing the transmission rate.

Furthermore, as pattern 3, as shown in FIG.18C, when the mobile station B in the process of soft handover is notified by the base station C that it is possible to increase the transmission rate or to maintain the transmission rate and notified by the base station D to decrease the transmission rate, the mobile station B performs transmission by decreasing the transmission rate.

Thus, according to this embodiment, for a mobile station in the process of soft handover, the base stations decide whether or not to change the transmission rate and the mobile station changes the transmission rate based on the assignment information based on the decision result from each base station, and therefore it is possible to change the transmission rate according to the channel condition and reduce interference with other cells.

In this embodiment, the base stations transmit transmission rate increase/decrease instructions based on the result of a decision on whether or not to change the transmission rate included in the assignment information, but it is also possible to change the transmission rate based on the result of a decision on whether or not to change the transmission rate and directly send this change result as new transmission parameters.

Furthermore, this embodiment is applicable not only to a case of continuous transmission when soft handover is in progress but also to a communication scheme in which continuous transmission is always carried out.

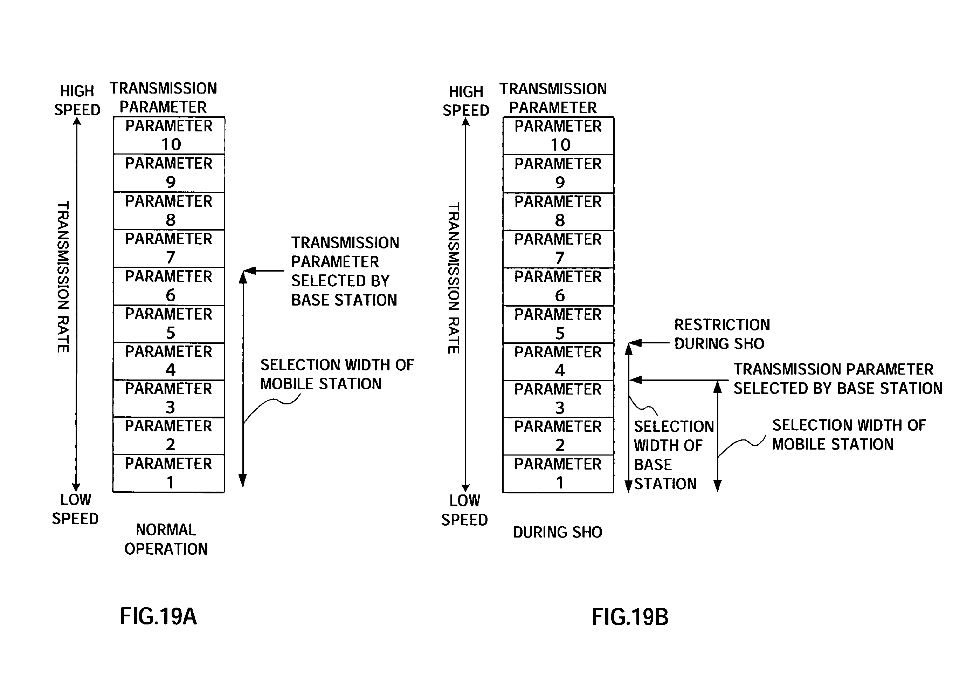

Furthermore, according to this embodiment, a base station can control changes of a transmission rate and can also limit this controllable range. More specifically, for example, when 10 stages of transmission rates are provided, there is ordinarily no restriction on the controllable range as shown in FIG.19A, and up to parameter 10 can be controlled, whereas when soft handover (SHO) takes place, a restriction is imposed so that transmission rates can be controlled only up to parameter 4 as shown in FIG.19B. If other base stations understand such a restriction (e.g., that transmission rates can be increased only up to parameter 4 during soft handover), it is possible to estimate interference. In this case, the transmission rates (or an upper limit thereof) specified by the base station are restricted and the base station must assign a transmission rate (or an upper limit thereof) from among the transmission rates meeting the restriction.

Furthermore, this embodiment has explained as an example of a method of changing a transmission rate the case where a plurality of base stations allow a mobile station in the process of soft handover (SHO) to change the transmission rate and a plurality of base stations perform reception (see FIG.18A to FIG.18C), but the present invention is not limited to this. For example, it is also possible for one base station to permit a change of the transmission rate and for one or a plurality of base stations to perform reception. That is, one base station can also control transmission.

### (Embodiment 4)

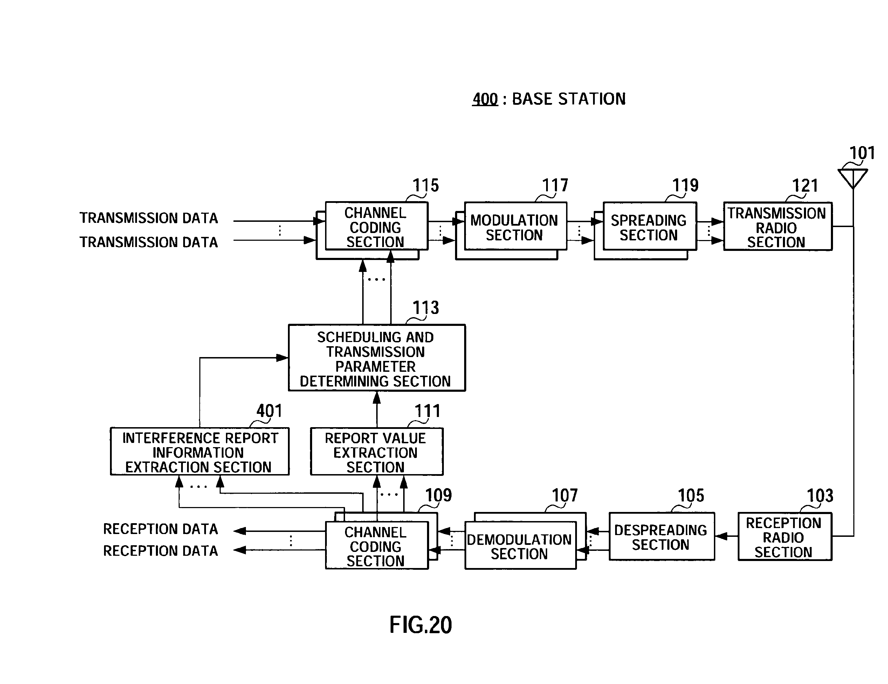

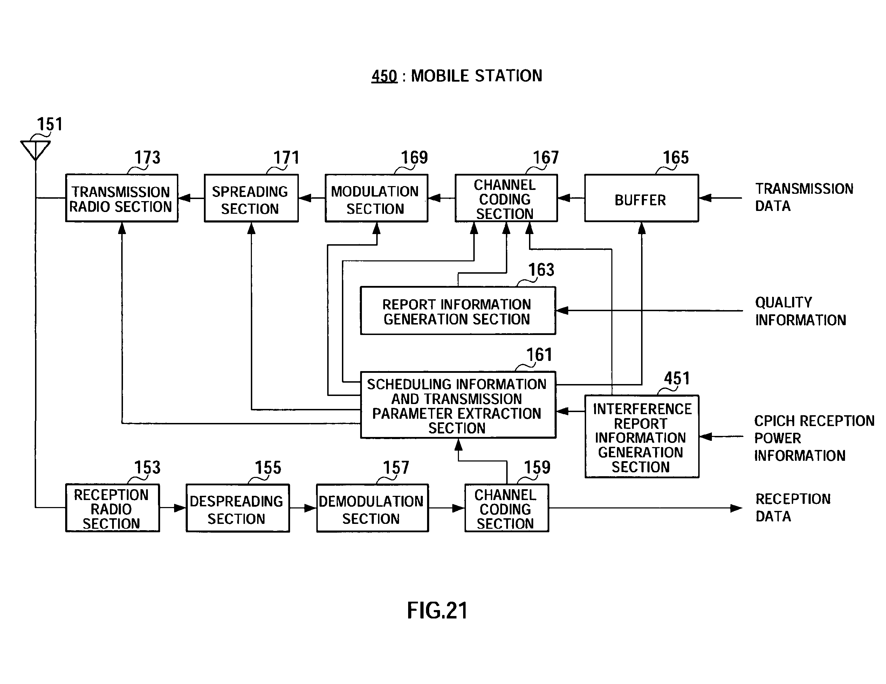

FIG.20 is a block diagram showing a configuration of main components of a base station apparatus (base station) 400 according to Embodiment 4 of the present invention and FIG.21 is a block diagram showing a configuration of main components of a communication terminal apparatus (mobile station) 450 according to Embodiment 4 of the present invention. A base station 400 shown in FIG.20 has a basic configuration similar to that of the base station 100 shown in FIG.2 and the same components are assigned the same reference numerals and explanations thereof will be omitted. Furthermore, the mobile station 450 shown in FIG.21 has a basic configuration similar to that of the mobile station 150 shown in FIG.3 and the same components are assigned the same reference numerals and explanations thereof will be omitted.

As opposed to Embodiment 1 in which transmission is switched to continuous transmission based on soft handover information, a feature of this embodiment is that transmission is switched to continuous transmission based on information which is other than soft handover information and indicative of the possibility of interference with other cells. For example, the mobile station observes the reception level of a CPICH (Common Pilot Channel) and when a predetermined threshold is exceeded, the mobile station decides that there is large interference with other cells and sends a signal (interference report information) to the base station. Then, the base station which has received the signal does not perform individual assignment to the mobile station and changes the mobile station so as to perform continuous transmission.

For this purpose, the base station 400 includes an interference report information extraction section 401 and the mobile station 450 includes an interference report information generation section 451.

The interference report information generation section 451 generates interference report information based on CPICH reception power information. More specifically, when reception power of the CPICH exceeds a predetermined threshold, the interference report information generation section 451 decides that there is large interference with other cells and generates interference report information. The interference report information generated is output to the channel coding section 115 and scheduling information and transmission parameter extraction section 161.

The interference report information extraction section 401 extracts the interference report information from the reception data from each mobile station. The extracted interference report information is output to the scheduling and transmission parameter determining section 113.

When the interference report information is input from the interference report information extraction section 401, the scheduling and transmission parameter determining section 113 does not perform normal assignment processing on the mobile station which has transmitted interference report information as in the case of Embodiment 1 where soft handover information is input. Thus, where there is data to be transmitted, the mobile station performs continuous transmission at a constant transmission rate (coding rate, modulation scheme, spreading factor, transmit power).

Then, when the reception power of the CPICH becomes lower than a predetermined threshold at the mobile station, the mobile station generates a signal indicating the fact and sends the signal to the base station and the base station which receives the signal changes the mode of the mobile station to a normal assigned transmission mode.

The method of canceling the continuous transmission mode is not limited to the above described example. For example, in the system which receives a periodic supply of interference report information as long as the reception power of the CPICH exceeds a predetermined threshold, when interference report information is not supplied for a predetermined time, it is also possible to cancel the continuous transmission mode and change the mode to a normal assigned transmission mode.

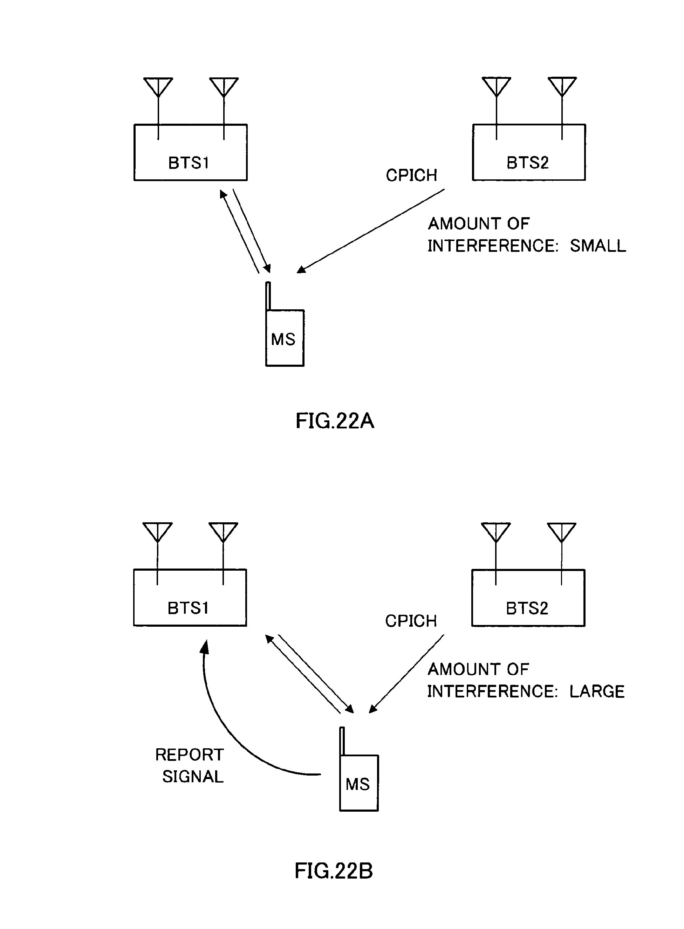

For example, as shown in FIG.22A, when as a result of detection of an amount of interference using the CPICH, the amount of interference of the mobile station (MS) connected to the base station (BTS1) with the other base station (BTS2) is small, the mobile station (MS) does not send interference report information to the base station (BTS1) and the base station (BTS1) sends assignment information to the mobile station (MS). In contrast, as shown in FIG.22B, when an amount of interference of the mobile station (MS) connected to the base station (BTS1) with the other base station (BTS2) is large, the mobile station (MS) sends interference report information to the base station (BTS1) and the base station (BTS1) which receives the interference report information does not send assignment information to the mobile station (MS).

Thus, according to this embodiment, when the mobile station is causing large interference with other cells, the base station does not perform individual assignment to the mobile station in question and the mobile station performs continuous transmission at a constant transmission rate, and therefore it is possible to reduce fluctuations in an amount of interference with other cells on the uplink, estimate interference from other cells in performing assignment and realize optimum assignment.

In this embodiment, the reception level of the CPICH is used as a state indicating interference with other cells except soft handover, but the present invention is not limited to this and any channel can be used if it is at least a channel capable of detecting interference with other cells (e.g., channel including pilot signals transmitted with constant power).

Furthermore, this embodiment has explained the case where the base station controls the method of switchover to continuous transmission, but the present invention is not limited to this. For example, the embodiment may also be adapted so as to spontaneously perform continuous transmission a predetermined time after the mobile station sends a signal.

Furthermore, this embodiment may also be combined with Embodiments 1 to 3 which use soft handover information.

Furthermore, what has been explained in Embodiments 1 to 3 is also applicable to this embodiment. The method of controlling a transmission rate for a mobile station which performs continuous transmission is not limited to the method described in Embodiment 3 and it goes without saying that any other method can also be used.

### (Embodiment 5)

This embodiment will explain a case where another channel is selected as amethodof switching to a continuous transmission mode. For example, in the case of a DPCH (Dedicated Physical Channel), since it sends the data continuously when there is data to be transmitted, it is possible to realize switchover to continuous transmission by switching a channel to the DPCH based on soft handover information (see Embodiment 1) or interference report information (see Embodiment 4).

The switchover destination channel is not limited to the DPCH. When there is data to be transmitted, the destination channel may be any channel if the channel at least transmits the data continuously.

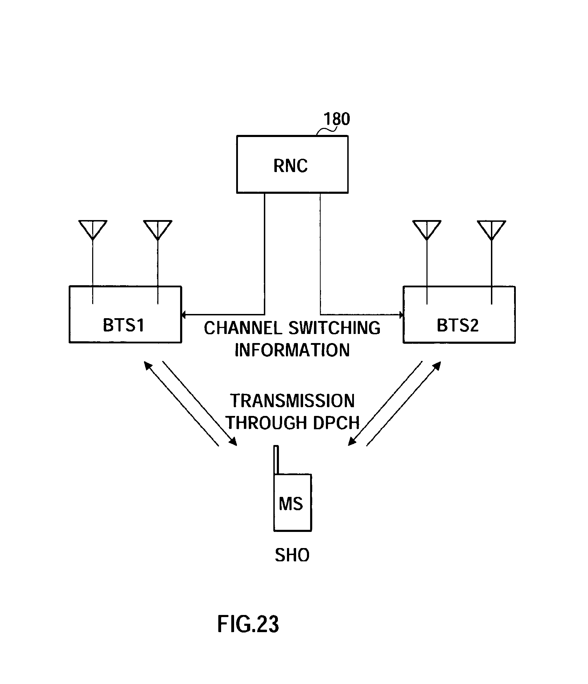

FIG.23 to FIG.25 illustrate the method of switching to a continuous transmission mode according to Embodiment 5.

As shown in FIG.23, for example, when a mobile station (MS) is in the process of soft handover (SHO), base stations (BTS1, BTS2) involved in the soft handover (SHO) with the mobile station (MS) obtain information on channel switchover to a DPCH from a superior RNC 180, switches the channel to the mobile station (MS) to a DPCH capable of continuous transmission and sends data using this DPCH. When the soft handover state is canceled, the base stations obtain information on channel switchover to the original channel from the RNC 180, switches the channel to the mobile station (MS) to the original channel and sends data based on the assignment.

Here, the supply of information on channel switchover to the DPCH from the RNC 180 to the base station may be not only the case based on soft handover information as shown in the above example but also the case based on interference report information or information on a request for switchover from the base station.

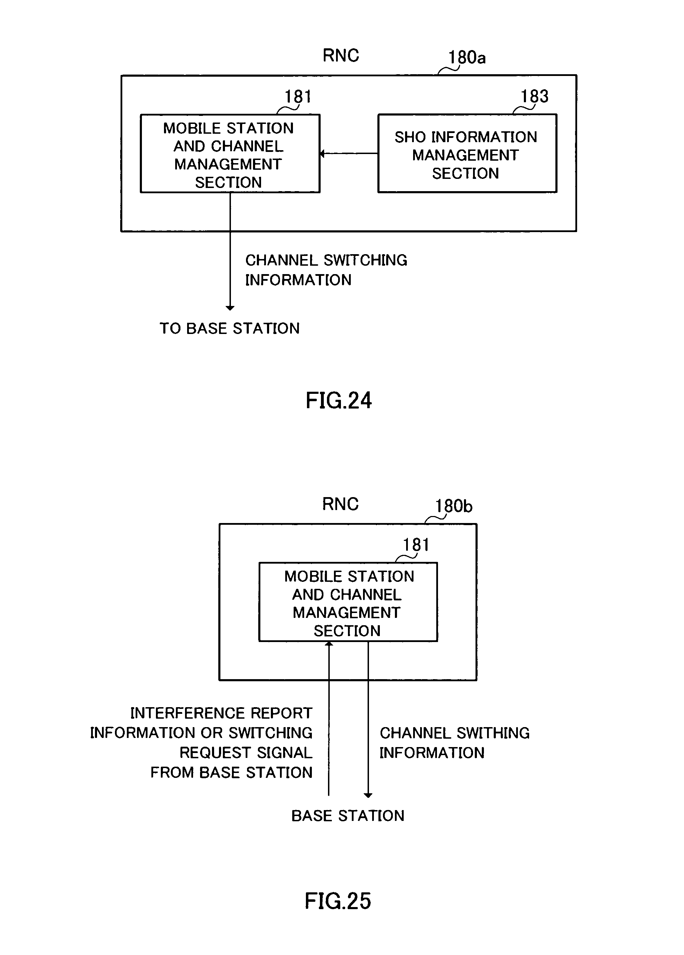

In the first case, as shown in FIG.24, an RNC 180a is provided with a soft handover (SHO) information management section 183, a mobile station and channel management section 181, and the mobile station and channel management section 181 supplies channel switchover information to the base station based on information from the soft handover information management section 183.

In the latter case, as shown in FIG.25, an RNC 180b includes a mobile station and channel management section 181 and the mobile station and channel management section 181 supplies channel switchover information to the base station based on interference report information (this information itself is transmitted from the mobile station) from the base station or information on a request for switchover.

Thus, according to this embodiment, when a mobile station reaches a point where it causes large interference with other cells, the base station switches the channel to the mobile station to a continuously transmittable channel, the mobile station performs continuous transmission at a constant transmission rate, and therefore it is possible to reduce fluctuations in an amount of interference with other cells, estimate interference from other cells in performing assignment and realize optimum assignment.

What has been explained in Embodiments 1 to 4 is also applicable to this embodiment.

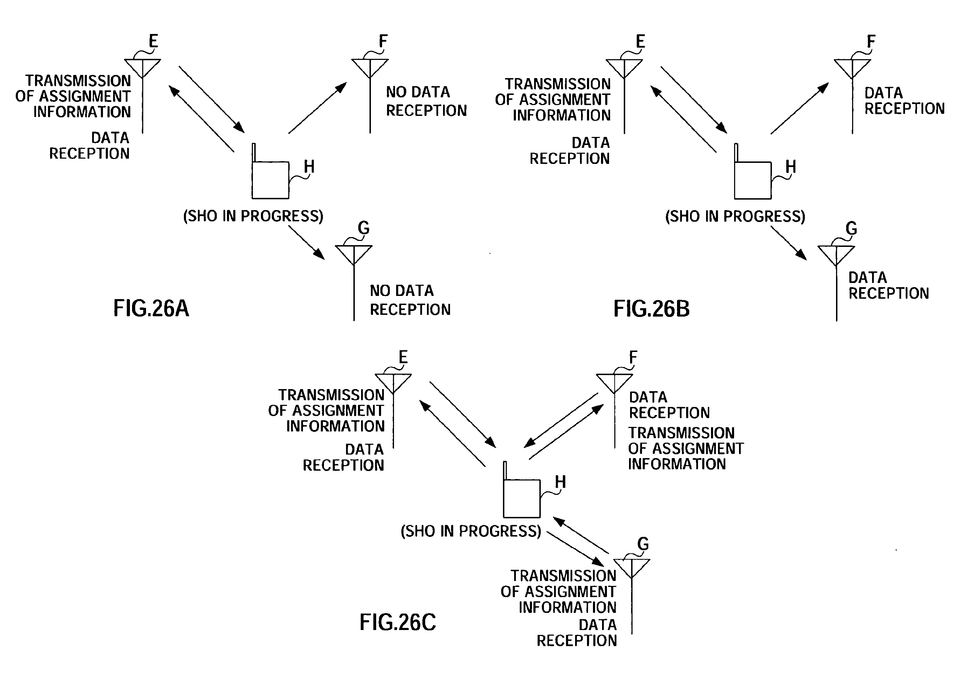

As a matter applicable to each embodiment, assignment of a base station to a mobile station in the process of soft handover (SHO) and a reception mode will be explained using FIG.26A to FIG.26C.

Here, three patterns are shown. As shown in FIG.26A, a first pattern is a case where one base station (E) performs assignment and one base station (E) performs reception. As shown in FIG.26B, a second pattern is a case where one base station (E) performs assignment and a plurality of base stations (E, F, G) perform reception. As shown in FIG.26C, a third pattern is a case where a plurality of base stations (E, F, G) perform assignment and the plurality of base stations (E, F, G) perform reception.

Since processing by a base station has smaller delay than processing by a higher RNC, assignment by the base station allows assignment that matches the channel quality more than assignment by the RNC.

The respective patterns have the following features. The first pattern provides the simplest control. According to the second pattern, a plurality of base stations perform reception, and therefore there is a high probability of successful reception than the first pattern (because the point is that data is concentrated on the RNC, which only requires that data be received by any one base station). These two patterns have a smaller amount of processing than the third pattern and consume less radio resource. The third pattern involves assignment from a plurality of base stations, and therefore requires an algorithm for determining a transmission rate at the mobile station and the mobile station can determine the transmission rate from assignment of each base station according to the algorithm.

The foregoing embodiments can be applied to all of the first to third patterns. The embodiments can reduce fluctuations in interference with other cells and thereby improve the efficiency of assignment to other cells and use resources more effectively.

As described above, the present invention makes it possible to estimate interference from other cells on an uplink and realize optimum assignment.

That is, the base station apparatus of the present invention comprises an assignment section that determines scheduling and transmission parameters for communication terminal apparatuses in the own cell and a transmission section that transmits the assignment result of the assignment section, wherein the assignment section does not perform individual assignment to a communication terminal apparatus in the process of soft handover among the communication terminal apparatuses in the own cell. In this case, for example, soft handover information used by the assignment section is given from a higher layer, or more specifically, a higher RNC (Radio Network Controller).

Since this configuration does not perform individual assignment to a communication terminal apparatus in the process of soft handover, the communication terminal apparatus performs continuous transmission at a predetermined transmission rate during the soft handover. It is thereby possible to estimate interference from other cells and realize optimum assignment on an uplink.

In the base station apparatus of the present invention in the above described configuration, the transmission parameter is an upper limit value of transmission rates selectable by the communication terminal apparatuses in the own cell.

According to this configuration, the transmission rates specified by the base station are upper limit values and the communication terminal apparatuses can select transmission rates equal to or lower than the specified transmission rate as the upper limit, and therefore the mobile station can perform transmission even when transmission is not possible at the specified transmission rate.

The base station apparatus of the present invention in the above described configuration further comprises a decision section that decides whether or not to change a transmission rate of a communication terminal apparatus in the process of soft handover, wherein the transmission section transmits the assignment result of the assignment section based on the decision result of the decision section.

According to this configuration, since it is decided whether or not to change the transmission rate of a communication terminal apparatus in the process of soft handover and the assignment result based on this decision result is sent, the communication terminal apparatus can change the transmission rate according to the channel condition and use radio resources more effectively.

In the base station apparatus of the present invention, only one of a plurality of base stations with which the communication terminal apparatus in the process of soft handover is communicating transmits the assignment result of the assignment section based on the decision result of the decision section.

According to this configuration, only one base station apparatus performs transmission control, and therefore compared to the case where a plurality of base station apparatuses perform transmission control there is no need for an algorithm for determining transmission rates at communication terminal apparatuses, and it is possible to reduce an amount of processing of the communication terminal apparatus and reduce consumption of radio resources.

The base station apparatus of the present invention in the above described configuration further comprises a restriction section that places restrictions on a transmission rate assignable to the communication terminal apparatus in the process of soft handover, wherein the assignment section determines transmission parameters for a communication terminal apparatus in the process of soft handover in the own cell within the restriction result of the restriction section.

According to this configuration, a plurality of base stations with which the communication terminal apparatus in the process of soft handover is communicating has their transmission rates restricted, and is thereby prevented from overestimating power of the signal from the communication terminal apparatus uselessly even when assignment of other base stations is unknown, and can thereby perform optimum assignment to the communication terminal apparatuses in the own cell.

In the base station apparatus of the present invention in the above configuration, the assignment section estimates an amount of interference based on transmission of a communication terminal apparatus in the process of soft handover among communication terminal apparatuses in the own cell and determines transmission parameters to be assigned to other communication terminal apparatuses by also considering the estimation result.

According to this configuration, an amount of interference based on transmission of a communication terminal apparatus in the process of soft handover is estimated and transmission parameters to be assigned to other communication terminal apparatuses are determined by also considering the estimation result, and therefore it is possible to determine transmission parameters in consideration of interference caused by transmission of the communication terminal apparatus in the process of soft handover and realize further optimization of assignment.

The RNC apparatus of the present invention is an RNC apparatus connected to the base station apparatus in the above described configuration which supplies information on soft handover related to communication terminal apparatuses in the cell of the base station apparatus to the base station apparatus.

According to this configuration, soft handover information is supplied from the RNC which performs control over soft handover, and therefore it is possible to easily realize a mobile communication system including the base station apparatus in the above described configuration.

The communication terminal apparatus of the present invention comprises an acquisition section that acquires an assignment result from the base station apparatus and a transmission section that performs transmission according to assigned scheduling and transmission rate according to the acquired assignment result, wherein when the own communication terminal apparatus is in the process of soft handover, the transmission section performs continuous transmission at a predetermined transmission rate. In this case, soft handover information used by the transmission section is given from a higher layer.

According to this configuration, the communication terminal apparatus in the process of soft handover performs continuous transmission at a predetermined transmission rate preferentially, and can thereby estimate interference from other cells on an uplink and realize optimum assignment.

The communication terminal apparatus of the present invention comprises an acquisition section that acquires an assignment result from the base station apparatus and a transmission section that performs transmission according to assigned scheduling and transmission rate according to the acquired assignment result, wherein when the own communication terminal apparatus is in the process of soft handover, the transmission section performs continuous transmission at the same transmission rate for transmission before soft handover takes place. In this case, soft handover information used by the transmission section is given from a higher layer.

According to this configuration, the communication terminal apparatus in the process of soft handover performs continuous transmission at the transmission rate for transmission before soft handover takes place, and therefore the base station apparatuses in other cell can easily estimate an amount of interference given to a signal from a communication terminal apparatus from the own cell and realize efficient assignment.

The communication terminal apparatus of the present invention in the above described configuration further comprises a determining section that determines, when a given transmission rate is an upper limit value, a transmission rate transmittable in a range equal to or lower than the upper limit value, wherein the transmission section performs transmission at the transmission rate determined by the determining section.

According to this configuration, when a given transmission rate is an upper limit value, the communication terminal apparatus determines a transmission rate transmittable in a range equal to or lower than the upper limit value, and therefore it is possible to perform transmission even when transmission is not possible at the given transmission rate.

In the communication terminal apparatus of the present invention in the above described configuration, the acquisition section does not receive any assignment result from the base station apparatus when the own communication terminal apparatus is in the process of soft handover.

According to this configuration, the communication terminal apparatus in the process of soft handover does not receive any assignment result from the base station apparatus, and therefore it is possible to reduce an amount of processing and suppress power consumption as well.

In the communication terminal apparatus of the present invention in the above described configuration, the acquisition section does not receive any assignment result from the base station apparatus when the own communication terminal apparatus is in the process of soft handover.

According to this configuration, the communication terminal apparatus in the process of soft handover does not use any assignment result from the base station apparatus, and therefore it is possible to perform predetermined transmission without performing any special control of not receiving the assignment result.

The communication terminal apparatus in the above described configuration further comprises a generation section that generates report information necessary for assignment by the base station apparatus, wherein the transmission section does not transmit the report information when the own communication terminal apparatus is in the process of soft handover.

According to this configuration, it is not necessary to generate any report information in the process of soft handover, and therefore it is possible to prevent resource consumption and power consumption on an uplink.

The communication terminal apparatus in the above described configuration further comprises a generation section that generates a signal indicating that the own communication terminal apparatus is in the process of soft handover, wherein the transmission section transmits the signal generated by the generation section to the assignment section provided in the base station apparatus for determining scheduling and transmission parameters as the destination.

According to this configuration, the base station apparatus can directly and easily know that the communication terminal apparatus in the own cell is in the process of soft handover not from a higher layer but from a signal from the communication terminal apparatus.

In the communication terminal apparatus in the above described configuration, the transmission section follows transmit power control during transmission.

According to this configuration, the transmission section follows transmit power control during transmission, and therefore it is possible to guarantee the reception performance of the base station apparatus.

The communication terminal apparatus in the above described configuration further comprises a reception section that receives an assignment result based on whether a transmission rate can be changed or not from the base station apparatus and a change section that changes the transmission rate based on the assignment result based on the received information on whether the transmission rate can be changed or not.

According to this configuration, the transmission rate is changed based on the assignment result based on the information on whether the transmission rate can be changed or not from the base station, and therefore it is possible to change the transmission rate according to the channel condition and use the radio resources more effectively.

The base station apparatus of the present invention comprises an assignment section that determines scheduling and transmission parameters for communication terminal apparatuses in the own cell and a transmission section that transmits the assignment result of the assignment section, wherein the assignment section always performs assignment at a predetermined transmission rate for a communication terminal apparatus in the process of soft handover from among communication terminal apparatuses in the own cell.

According to this configuration, assignment is always performed to a communication terminal apparatus in the process of soft handover at a predetermined transmission rate, and therefore it is possible to estimate interference from other cells on an uplink and realize optimum assignment.

The communication terminal apparatus of the present invention comprises an acquisition section that acquires an assignment result from the base station apparatus and a transmission section that performs transmission according to assigned scheduling and transmission rate according to the acquired assignment result, wherein when the own communication terminal apparatus is in the process of soft handover, the transmission section always performs continuous transmission at a predetermined transmission rate according to the acquired assignment result.

According to this configuration, the communication terminal apparatus in the process of soft handover always performs continuous transmission at a predetermined transmission rate, and can thereby estimate interference from other cells on an uplink and realize optimum assignment.

The communication terminal apparatus of the present invention in the above described configuration further comprises a generation section that generates report information necessary for assignment at the base station apparatus, wherein the transmission section does not send the report information based on a control signal from the base station apparatus when the own communication terminal apparatus is in the process of soft handover.

According to this configuration, report information need not be generated when soft handover is in progress, and therefore it is possible to prevent resource consumption and power consumption on the uplink.

The base station apparatus of the present invention comprises an assignment section that determines scheduling and transmission parameters for the communication terminal apparatus in the own cell and a transmission section that transmits the assignment result of the assignment section, wherein the assignment section does not perform individual assignment to a communication terminal apparatus causing large interference with other cells out of communication terminal apparatuses in the own cell.

According to this configuration, individual assignment is not performed to the communication terminal apparatus causing large interference with other cells, and therefore the communication terminal apparatus performs continuous transmission at a constant transmission rate while causing large interference with other cells. This makes it possible to reduce fluctuations in interference with other cells on an uplink, and therefore the base station apparatus can estimate interference from other cells and realize optimum assignment.

The communication terminal apparatus of the present invention comprises an acquisition section that acquires an assignment result from the base station apparatus and a transmission section that performs transmission according to the assigned scheduling and transmission rate according to the acquired assignment result, wherein the transmission section performs continuous transmission at a predetermined transmission rate when the own communication terminal apparatus causes large interference with other cells.

According to this configuration, when interference with other cells is large, the communication terminal apparatus performs continuous transmission at a predetermined transmission rate preferentially, and can thereby reduce fluctuations in interference with other cells on an uplink, and therefore the base station apparatus can estimate interference from other cells and realize optimum assignment.

The base station apparatus of the present invention comprises an assignment section that determines scheduling and transmission parameters for communication terminal apparatuses in the own cell and a transmission section that transmits the assignment result of the assignment section, wherein the assignment section always performs assignment at a predetermined transmission rate for a communication terminal apparatus causing large interference with other cells out of communication terminal apparatuses in the own cell.

According to this configuration, assignment is always performed at a predetermined transmission rate to the communication terminal apparatus causing large interference with other cells, which reduces fluctuations in interference with other cells on an uplink, and therefore the base station apparatus can estimate interference from other cells and realize optimum assignment.

The communication terminal apparatus of the present invention comprises an acquisition section that acquires an assignment result from the base station apparatus and a transmission section that performs transmission with the assigned scheduling and transmission rate according to the acquired assignment result, wherein when the own communication terminal apparatus causes large interference with other cells, the transmission section always performs continuous transmission at a predetermined transmission rate according to the acquired assignment result. In this case, the communication terminal apparatus further comprises a generation section that generates a signal indicating that the own communication terminal apparatus causes large interference with other cells and the transmission section transmits the signal generated by the generation section.

According to this configuration, when interference with other cells is large, the communication terminal apparatus always performs continuous transmission at a predetermined transmission rate, and therefore fluctuations in interference with other cells can be reduced on an uplink and the base station apparatus can estimate interference from other cells and realize optimum assignment.

The base station apparatus of the present invention comprises an assignment section that determines scheduling and transmission parameters for communication terminal apparatuses in the own cell and a transmission section that transmits the assignment result of the assignment section, wherein the transmission section changes the channel for the communication terminal apparatus in the process of soft handover out of communication terminal apparatuses in the own cell to another channel capable of transmitting data continuously.

According to this configuration, the channel is switched over to another channel capable of continuous transmission for the communication terminal apparatus in the process of soft handover, and therefore the communication terminal apparatus performs continuous transmission at a constant transmission rate when soft handover is in progress. In this way, it is possible to estimate interference from other cells on an uplink and realize optimum assignment.

The communication terminal apparatus of the present invention comprises an acquisition section that acquires an assignment result from the base station apparatus and a transmission section that performs transmission through a first channel at the assigned scheduling and transmission rate according to the acquired assignment result, wherein when the own communication terminal apparatus is in the process of soft handover, the transmission section performs continuous transmission using a second channel capable of transmitting data continuously.

According to this configuration, the communication terminal apparatus in the process of soft handover performs continuous transmission at a predetermined transmission rate using another channel capable of continuous transmission, and can thereby estimate interference from other cells on an uplink and realize optimum assignment.

The base station apparatus of the present invention comprises an assignment section that determines scheduling and transmission parameters for communication terminal apparatuses in the own cell and a transmission section that transmits the assignment result of the assignment section, wherein the transmission section changes the channel for the communication terminal apparatus causing large interference with other cells out of communication terminal apparatuses in the own cell to another channel capable of transmitting data continuously.

According to this configuration, the channel is changed to another channel capable of continuous transmission for the communication terminal apparatus causing large interference with other cells, and therefore the communication terminal apparatus performs continuous transmission at a constant transmission rate when interference with other cells is large. This makes it possible to estimate interference from other cells on an uplink and realize optimum assignment.

The communication terminal apparatus of the present invention comprises an acquisition section that acquires an assignment result from the base station apparatus and a transmission section that performs transmission through a first channel at the assigned scheduling and transmission rate according to the acquired assignment result, wherein when the own communication terminal apparatus causes large interference with other cells, the transmission section performs continuous transmission using a second channel capable of transmitting data continuously.

According to this configuration, when interference with other cells is large, the communication terminal apparatus performs continuous transmission using another channel capable of continuous transmission at a transmission rate, and therefore it is possible to estimate interference from other cells on an uplink and realize optimum assignment

This application is based on the Japanese Patent Application No.2002-380785 filed on December 27, 2002, and the Japanese Patent Application No. 2003-037483 filed on February 14, 2003, entire content of which is expressly incorporated by reference herein.

### Industrial Applicability

The base station apparatus and communication terminal apparatus according to the present invention can estimate interference from other cells on an uplink and realize optimum assignment and are useful as a high-speed packet transmission technology on the uplink.

## Claims

1. A base station apparatus comprising:
an assignment section that determines scheduling and transmission parameters for communication terminal apparatuses in the own cell; and
a transmission section that transmits the assignment result of said assignment section,
wherein said assignment section does not perform individual assignment to a communication terminal apparatus in the process of soft handover among communication terminal apparatuses in the own cell.

2. The base station apparatus according to claim 1, wherein said transmission parameter is an upper limit value of transmission rates selectable by the communication terminal apparatuses in the own cell.

3. The base station apparatus according to claim 1, wherein the soft handover information obtained by said assignment section is given from a higher layer.

4. The base station apparatus according to claim 1, further comprising a decision section that decides whether or not to change a transmission rate of a communication terminal apparatus in the process of soft handover,
wherein said transmission section transmits the assignment result of said assignment section based on the decision result of said decision section.

5. The base station apparatus according to claim 4, wherein only one of a plurality of base stations with which the communication terminal apparatus in the process of soft handover is communicating transmits the assignment result of said assignment section based on the decision result of said decision section.

6. The base station apparatus according to claim 1, further comprising a restriction section that places restrictions on a transmission rate assignable to the communication terminal apparatus in the process of soft handover,
wherein said assignment section determines transmission parameters for a communication terminal apparatus in the process of soft handover in the own cell within the restriction result of said restriction section.

7. The base station apparatus according to claim 1, wherein said assignment section estimates an amount of interference based on transmission of a communication terminal apparatus in the process of soft handover among communication terminal apparatuses in the own cell and determines transmission parameters to be assigned to other communication terminal apparatuses by also considering said estimation result.

8. An RNC apparatus connected to the base station apparatus according to claim 1 which supplies information on soft handover related to communication terminal apparatuses in the cell of said base station apparatus to said base station apparatus.

9. A communication terminal apparatus comprising:
an acquisition section that acquires an assignment result from the base station apparatus; and
a transmission section that performs transmission according to assigned scheduling and transmission rate according to the acquired assignment result,
wherein when the own communication terminal apparatus is in the process of soft handover, said transmission section performs continuous transmission at a predetermined transmission rate.

10. The communication terminal apparatus according to claim 9, wherein when the own communication terminal apparatus is in the process of soft handover, said transmission section performs continuous transmission at the same transmission rate used for transmission before soft handover takes place instead of performing continuous transmission at a predetermined transmission rate.

11. The communication terminal apparatus according to claim 9, further comprising a determining section that determines, when a given transmission rate is an upper limit value, a transmission rate transmittable within a range equal to or lower than said upper limit value,
wherein said transmission section performs transmission at the transmission rate determined by said determining section.

12. The communication terminal apparatus according to claim 9, wherein said acquisition section does not receive any assignment result from the base station apparatus when the own communication terminal apparatus is in the process of soft handover.

13. The communication terminal apparatus according to claim 9, wherein said acquisition section does not use any assignment result received from the base station apparatus when the own communication terminal apparatus is in the process of soft handover.

14. The communication terminal apparatus according to claim 9, wherein soft handover information used by said transmission section is given from a higher layer.

15. The communication terminal apparatus according to claim 9, further comprising a generation section that generates report information necessary for assignment by the base station apparatus,
wherein said transmission section does not transmit said report information when the own communication terminal apparatus is in the process of soft handover.

16. The communication terminal apparatus according to claim 9, further comprising a generation section that generates a signal indicating that the own communication terminal apparatus is in the process of soft handover,
wherein said transmission section transmits the signal generated by said generation section to the assignment section provided in said base station apparatus for determining scheduling and transmission parameters as the destination.

17. The communication terminal apparatus according to claim 9, wherein said transmission section follows transmit power control during transmission.

18. The communication terminal apparatus according to claim 9, further comprising a reception section that receives an assignment result based on whether a transmission rate can be changed or not from the base station apparatus; and
a change section that changes the transmission rate based on the assignment result based on the received information on whether the transmission rate can be changed or not.
